# EUROPEAN PATENT APPLICATION

(11) **EP 4 611 475 A1**
(43) Date of publication of application: **03.09.2025**
(21) Application number: 23885085.3
(22) Date of filing: 03.11.2023
(51) Int. Cl.: H04W 76/11

(54) **LINK CONFIGURATION METHOD, COMMUNICATION APPARATUS, AND STORAGE MEDIUM**

(30) Priority: 04.11.2022 CN 202211379749
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); WANG, Rui, Shenzhen, Guangdong 518129 (CN)
(74) Representative: Isarpatent
(86) International application number: PCT/CN2023/129544
(87) International publication number: WO 2024/094160

(57) **Abstract**

Embodiments of this application disclose a link configuration method, a communication apparatus, and a storage medium. The method includes: sending first indication information to one or more relay terminals; receiving an identifier of one or more relay terminals from the one or more relay terminals; sending first request information to an access network device, where the first request information includes the identifier of the one or more relay terminals, and the first request information is for requesting the access network device to configure a relay-based indirect link for a remote terminal; and receiving first configuration information from the access network device, where the first configuration information is used to configure an indirect link for a remote terminal over which relay is performed via the target relay terminal, and the target relay terminal is determined by the access network device from the one or more relay terminals.

## Description

This application claims priority to Chinese Patent Application No. 202211379749.2, filed with the China National Intellectual Property Administration on November 4, 2022 and entitled "LINK CONFIGURATION METHOD, COMMUNICATION APPARATUS, AND STORAGE MEDIUM", which is incorporated herein by reference in its entirety.

### TECHNICAL FIELD

The present invention relates to the field of communication technologies, and specifically, to a link configuration method, a communication apparatus, and a storage medium.

### BACKGROUND

In a wireless communication system, data communication may be performed between user equipments (User Equipments, UEs) via a network device, or the communication may be directly performed between the UEs without the network device. A link between the UEs is referred to as a sidelink (Sidelink), and can effectively shorten a communication delay.

To further expand network and sidelink coverage, improve power efficiency, and support a wider range of applications and services, 3GPP has carried out research on a sidelink relay (Sidelink Relay) technology in R17, and has introduced a user-to-network relay (UE-to-Network relay, U2N relay) technology. As an evolution of a sidelink relay in R17, 3GPP has set up an R18 sidelink relay enhancement project in R18. A sub-research direction of R18 sidelink relay enhancement is multi-link relay (multi-path Relay). That is, in addition to supporting setup of a relay link via a relay (relay) UE, setting up a connection to a base station through a Uu interface by a remote UE is further supported. On the relay link, the remote UE and the relay UE are connected over a sidelink. In this multi-path setup manner, the remote UE needs to discover a surrounding candidate relay UE through a discovery (discovery) procedure.

With evolution of R18, the remote UE and the relay UE may communicate with each other through a sidelink connection, or may communicate with each other over a non-3GPP link. When the relay UE that is selected to perform relay for the remote UE is not in a connected state, how to configure a multi-link for the remote UE is a technical problem that urgently needs to be resolved.

### SUMMARY

Embodiments of this application provide a link configuration method. Request information is sent to an access network device, so that the access network device configures a multi-link for a remote terminal, and the remote terminal may perform communication over the multi-link, thereby improving communication efficiency.

According to a first aspect, an embodiment of this application provides a link configuration method. The method is applied to a remote terminal, and the method includes:
sending first indication information to one or more relay terminals, where the first indication information indicates the one or more relay terminals to set up a radio resource control connection to an access network device; receiving an identifier of the one or more relay terminals from the one or more relay terminals, where the identifier of the one or more relay terminals is allocated by the access network device to the one or more relay terminals after the radio resource control connection to the access network device is set up; sending first request information to the access network device, where the first request information includes the identifier of the one or more relay terminals, and the first request information is for requesting the access network device to configure a relay-based indirect link for the remote terminal; and receiving first configuration information from the access network device, where the first configuration information is used to configure an indirect link for the remote terminal over which relay is performed via the target relay terminal, and the target relay terminal is determined by the access network device from the one or more relay terminals.

In an implementation of this application, the identifier of the one or more relay terminals is a cell radio network temporary identifier of the one or more relay terminals.

In an implementation of this application, the first indication information includes a first cause value, and the first cause value indicates the one or more relay terminals to provide a relay service for the remote terminal; or the first cause value is used as a cause value used by the one or more relay terminals to set up the radio resource control connection to the access network device.

In an implementation of this application, the first request information further includes information about the one or more relay terminals; and the information about the one or more relay terminals includes one or more of load, a remaining battery level, and user equipment interface connection quality of the one or more relay terminals.

In an implementation of this application, the method further includes:
obtaining a radio resource control connection status of a candidate relay terminal paired with the remote terminal and/or information about the candidate relay terminal, where the information about the candidate relay terminal includes one or more of load, a remaining battery level, and user equipment interface connection quality of the candidate relay terminal; and
determining the one or more relay terminals from the candidate relay terminal based on the radio resource control connection status of the candidate relay terminal and/or the information about the candidate relay terminal.

In an implementation of this application, the method further includes:
deciding, based on a relationship between a communication status of the remote terminal and a threshold, to request the access network device to configure the indirect link for the remote terminal, where the threshold is determined by the remote terminal or the access network device.

In an implementation of this application, the communication status includes one or more of the following: an uplink rate, uplink bandwidth, a packet loss rate, and signal quality of a direct link.

According to a second aspect, an embodiment of this application provides a link configuration method, applied to a relay terminal. The method includes:
receiving first indication information from a remote terminal, where the first indication information indicates the relay terminal to set up a radio resource control connection to an access network device;
sending an identifier of the relay terminal to the remote terminal, where the identifier of the relay terminal is allocated by the access network device to the relay terminal after the radio resource control connection to the access network device is set up; and
receiving second configuration information from the access network device, where the second configuration information is used to configure an indirect link for the remote terminal over which relay is performed via the relay terminal.

In an embodiment of this application, the identifier of the relay terminal is a cell radio network temporary identifier of the relay terminal.

In an embodiment of this application, a radio resource control connection setup request message sent by the relay terminal to the access network device includes a second cause value, and the second cause value indicates a requirement of the relay terminal for setting up the radio resource control connection.

In an embodiment of this application, when the first indication information carries a first cause value, the first cause value is used as the second cause value; when the first indication information carries the first cause value, and the first cause value is a cause value related to a high priority service, the first cause value is used as the second cause value; one cause value is determined from a plurality of candidate cause values as the second cause value; or the second cause value is a cause value that is defined in a protocol and that indicates that the relay terminal sets up the radio resource control connection to provide a relay service.

According to a third aspect, an embodiment of this application provides a link configuration method, applied to an access network device. The method includes:
receiving first request information from a remote terminal, where the first request information includes an identifier of one or more relay terminals, and the identifier of the one or more relay terminals is allocated by the access network device to the one or more relay terminals after a radio resource control connection to the access network device is set up; determining a target relay terminal from the one or more relay terminals; sending first configuration information to the remote terminal, where the first configuration information is used to configure an indirect link for the remote terminal over which relay is performed via the target relay terminal; and sending second configuration information to the target relay terminal, where the second configuration information is used to configure the indirect link.

In an implementation of this application, the determining a target relay terminal from the one or more relay terminals includes: determining the target relay terminal based on information about the one or more relay terminals, where the information about the one or more relay terminals includes one or more of load, a remaining battery level, and user equipment interface connection quality of the one or more relay terminals.

According to a fourth aspect, an embodiment of this application provides a link configuration method, applied to a remote terminal. The method includes:
obtaining a radio resource control connection status of one or more relay terminals;
sending second request information to an access network device based on the radio resource control connection status of the one or more relay terminals, where the second request information is for requesting the access network device to configure a relay-based indirect link for the remote terminal; and
receiving third configuration information from the access network device, where the third configuration information is used to configure an indirect link for the remote terminal over which relay is performed via a target relay terminal, and the target relay terminal is determined by the access network device from the one or more relay terminals.

In an embodiment of this application, when the radio resource control connection status of the one or more relay terminals is a connected state, the first request information includes an identifier of the one or more relay terminals; or
when the radio resource control connection status of the one or more relay terminals is an idle state or an inactive state, the first request information includes first indication information for requesting to configure the indirect link for the remote terminal.

In an embodiment of this application, second indication information is sent to the target relay terminal, where the second indication information indicates the target relay terminal to set up a radio resource control connection to the access network device.

In an embodiment of this application, the second indication information includes a third cause value, where the third cause value indicates the target relay terminal to provide a relay service for the remote terminal, or is used as a cause value used by the target relay terminal to set up the radio resource control connection to the access network device.

In an embodiment of this application, the second request information further includes information about the one or more relay terminals, where
the information about the one or more relay terminals includes one or more of load, a remaining battery level, and user equipment interface connection quality of the one or more relay terminals.

In an implementation of this application, the method further includes:
obtaining a radio resource control connection status of a candidate relay terminal paired with the remote terminal and/or information about the candidate relay terminal, where the information about the candidate relay terminal includes one or more of load, a remaining battery level, and user equipment interface connection quality of the candidate relay terminal; and
determining the one or more relay terminals from the candidate relay terminal based on the radio resource control connection status of the candidate relay terminal and/or the information about the candidate relay terminal.

In an embodiment of this application, the method further includes:
deciding, based on a relationship between a communication status of the remote terminal and a threshold, to request the access network device to configure the indirect link for the remote terminal, where the threshold is determined by the remote terminal or the access network device.

In an embodiment of this application,
the communication status includes one or more of the following:
an uplink rate, uplink bandwidth, a packet loss rate, and signal quality of a direct link.

According to a fifth aspect, an embodiment of this application provides a link configuration method, applied to an access network device. The method includes:
receiving second request information from a remote terminal, where the second request information is for requesting the access network device to configure a relay-based indirect link for the remote terminal;
determining a target relay terminal from one or more relay terminals based on the second request information;
sending third configuration information to the remote terminal, where the third configuration information is used to configure an indirect link for the remote terminal over which relay is performed via the target relay terminal; and
sending fourth configuration information to the target relay terminal, where the fourth configuration information is used to configure the target relay terminal to provide a relay service on the indirect link.

In an embodiment of this application, when the second request information includes an identifier of the one or more relay terminals, the determining a target relay terminal from one or more relay terminals includes:
determining the target relay terminal from the one or more relay terminals based on the identifier of the one or more relay terminals.

In an embodiment of this application, when the second request information includes indication information for requesting to configure the relay-based indirect link for the remote terminal, the determining a target relay terminal from one or more relay terminals based on the second request information includes:
obtaining the one or more relay terminals from a core network in response to the second request information; and
determining the target relay terminal from the one or more relay terminals.

In an embodiment of this application, the determining a target relay terminal from one or more relay terminals includes:
determining the target relay terminal based on information about the one or more relay terminals, where
the information about the one or more relay terminals includes one or more of load, a remaining battery level, and user equipment interface connection quality of the one or more relay terminals.

According to a sixth aspect, an embodiment of this application provides a link configuration method, applied to a remote terminal. The method includes:
allocating an identifier to one or more relay terminals;
sending third indication information to the one or more relay terminals, where the third indication information indicates the one or more relay terminals to set up a radio resource control connection to an access network device, and the third indication information includes an identifier allocated by the remote terminal to the one or more relay terminals;
sending third request information to the access network device, where the third request information includes the identifier of the one or more relay terminals, and the third request information is for requesting the access network device to configure a relay-based indirect link for the remote terminal; and
receiving fifth configuration information from the access network device, where the fifth configuration information is used to configure an indirect link for the remote terminal over which relay is performed via a target relay terminal, and the target relay terminal is determined by the access network device from the one or more relay terminals.

In an implementation of this application, the first indication information includes a first cause value, and the first cause value indicates the one or more relay terminals to provide a relay service for the remote terminal; or
the first cause value is used as a cause value used by the one or more relay terminals to set up the radio resource control connection to the access network device.

In an implementation of this application, the first request information further includes information about the one or more relay terminals; and
the information about the one or more relay terminals includes one or more of load, a remaining battery level, and user equipment interface connection quality of the one or more relay terminals.

In an implementation of this application, the method further includes:
obtaining a radio resource control connection status of a candidate relay terminal paired with the remote terminal and/or information about the candidate relay terminal, where the information about the candidate relay terminal includes one or more of load, a remaining battery level, and user equipment interface connection quality of the candidate relay terminal; and
determining the one or more relay terminals from the candidate relay terminal based on the radio resource control connection status of the candidate relay terminal and/or the information about the candidate relay terminal.

In an implementation of this application, the method further includes:
deciding, based on a relationship between a communication status of the remote terminal and a threshold, to request the access network device to configure the indirect link for the remote terminal, where the threshold is determined by the remote terminal or the access network device.

In an implementation of this application, the communication status includes one or more of the following: an uplink rate, uplink bandwidth, a packet loss rate, and signal quality of a direct link.

According to a seventh aspect, an embodiment of this application provides a link configuration method, applied to a relay terminal. The method includes:
receiving third indication information from a remote terminal, where the third indication information indicates the relay terminal to set up a radio resource control connection to an access network device;
setting up a radio resource control connection to the access network device; and
receiving sixth configuration information from the access network device, where the sixth configuration information is used to configure an indirect link for the remote terminal over which relay is performed via the relay terminal.

In an implementation of this application, the method further includes:
sending, to the access network device, an identifier allocated by the remote terminal to the relay terminal.

In an implementation of this application, the third indication information includes the identifier allocated by the remote terminal to the relay terminal.

In an embodiment of this application, the identifier allocated by the remote terminal to the one or more relay terminals includes an index value allocated by the remote terminal for the one or more relay terminals and/or an identifier of the remote terminal.

In an embodiment of this application, a radio resource control connection setup request message sent by the relay terminal to the access network device includes a third cause value, and the cause value indicates that the relay terminal provides a relay service for the remote terminal.

In an embodiment of this application, when the third indication information carries a cause value, the cause value is used as the third cause value; when the third indication information carries the cause value, and the cause value is a cause value related to a high priority service, the cause value is used as the third cause value; one cause value is determined from a plurality of candidate cause values as the third cause value; or the cause value is a cause value that is defined in a protocol and that indicates that the relay terminal sets up the radio resource control connection to provide a relay service.

According to an eighth aspect, an embodiment of this application provides a link configuration method, applied to an access network device. The method includes:
setting up a radio resource control connection to one or more relay terminals;
obtaining, from the one or more relay terminals, an identifier allocated by a remote terminal to the one or more relay terminals;
receiving third request information from the remote terminal, where the third request information includes the identifier allocated by the remote terminal to the one or more relay terminals;
determining a target relay terminal from the one or more relay terminals;
sending fifth configuration information to the remote terminal, where the fifth configuration information is used to configure an indirect link for the remote terminal over which relay is performed via the target relay terminal; and
sending sixth configuration information to the relay terminal, where the sixth configuration information is used to configure the indirect link.

According to a ninth aspect, an embodiment of this application provides a link configuration method, applied to a remote terminal. The method includes:
sending fourth indication information to one or more relay terminals, where the fourth indication information indicates the one or more relay terminals to set up a radio resource control connection to an access network device, and indicates the one or more relay terminals to request the access network device to configure a relay-based indirect link for the remote terminal; and
receiving seventh configuration information from the access network device, where the seventh configuration information is used to configure an indirect link for the remote terminal over which relay is performed via a target relay terminal, and the target relay terminal is determined by the access network device from the one or more relay terminals.

In an embodiment of this application, the method further includes:
sending an identifier of the remote terminal to the access network device.

In an implementation of this application, the fourth indication information includes a fourth cause value, and the fourth cause value indicates the one or more relay terminals to provide a relay service for the remote terminal; or
the fourth cause value is used as a cause value used by the one or more relay terminals to set up the radio resource control connection to the access network device.

In an implementation of this application, the method further includes:
deciding, based on a relationship between a communication status of the remote terminal and a threshold, to request the access network device to configure the indirect link for the remote terminal, where the threshold is determined by the remote terminal or the access network device.

In an implementation of this application, the communication status includes one or more of the following: an uplink rate, uplink bandwidth, a packet loss rate, and signal quality of a direct link.

According to a tenth aspect, an embodiment of this application provides a link configuration method, applied to a relay terminal. The method includes:
receiving fourth indication information from a remote terminal, where the fourth indication information indicates the relay terminal to set up a radio resource control connection to an access network device, and indicates the relay terminal to request the access network device to configure a relay-based indirect link for the remote terminal;
setting up a radio resource control connection to the access network device;
sending fourth request information to the access network device, where the fourth request information is for requesting the access network device to configure a relay-based indirect link for the remote terminal; and
receiving eighth configuration information from the access network device, where the eighth configuration information is used to configure an indirect link for the remote terminal over which relay is performed via the relay terminal.

In an embodiment of this application, a radio resource control connection setup request message sent by the relay terminal to the access network device includes a cause value, and the third cause value indicates that the relay terminal provides a relay service for the remote terminal.

In an embodiment of this application, when the fourth indication information carries a fourth cause value, the fourth cause value is used as the cause value; when the fourth indication information carries the fourth cause value, and the fourth cause value is a cause value related to a high priority service, the fourth cause value is used as the cause value; one cause value is determined from a plurality of candidate cause values as the second cause value; or the cause value is a cause value that is defined in a protocol and that indicates that the relay terminal sets up the radio resource control connection to provide a relay service.

According to an eleventh aspect, an embodiment of this application provides a link configuration method, applied to an access network device. The method includes:
setting up a radio resource control connection to one or more relay terminals;
receiving fourth request information from the one or more relay terminals, where the fourth request information is for requesting the access network device to configure a relay-based indirect link for the remote terminal;
determining a target relay terminal from the one or more relay terminals;
sending seventh configuration information to the remote terminal, where the seventh configuration information is used to configure an indirect link for the remote terminal over which relay is performed via the target relay terminal; and
sending eighth configuration information to the target relay terminal, where the eighth configuration information is used to configure the indirect link.

In an embodiment of this application, the method further includes: receiving an identifier of a remote terminal from the remote terminal.

In an implementation of this application, the fourth request information includes the identifier of the remote terminal.

In an implementation of this application, the identifier of the remote terminal includes a cell radio network temporary identifier of the remote terminal and/or the identifier allocated by the remote terminal to the remote

According to a twelfth aspect, an embodiment of this application provides a link configuration method, applied to a remote terminal, and including:
sending fifth indication information to one or more relay terminals, where the fifth indication information indicates the one or more relay terminals to set up a radio resource control connection to an access network device;
sending fifth request information to the access network device, where the fifth request information is for requesting the access network device to configure a relay-based indirect link for the remote; and
receiving ninth configuration information from the access network device, where the ninth configuration information is used to configure an indirect link for the remote terminal over which relay is performed via the target relay terminal, and the target relay terminal is determined by the access network device from the one or more relay terminals.

According to a thirteenth aspect, an embodiment of this application provides a link configuration method, applied to a relay terminal, and including:
receiving fifth indication information from a remote terminal, where the fifth indication information indicates the relay terminal to set up a radio resource control connection to an access network device;
setting up the radio resource control connection to the access network device; and
receiving tenth configuration information from the access network device, where the tenth configuration information is used to configure an indirect link for the remote terminal over which relay is performed via the relay terminal.

According to a fourteenth aspect, an embodiment of this application provides a link configuration method, applied to an access network device, and including:
setting up a radio resource control connection to one or more relay terminals;
receiving fifth request information from a remote terminal, where the fifth request information is for requesting the access network device to configure a relay-based indirect link for the remote terminal;
determining a target relay terminal from the one or more relay terminals;
sending ninth configuration information to the remote terminal, where the ninth configuration information is used to configure an indirect link for the remote terminal over which relay is performed via the target relay terminal; and
sending tenth configuration information to the target relay terminal, where the tenth configuration information is used to configure an indirect link for the remote terminal over which relay is performed via the relay terminal.

In an implementation of this application, the method includes:
obtaining one or more relay terminals from a core network.

According to a fifteenth aspect, an embodiment of this application provides a link configuration method, applied to a remote terminal. The method includes:
obtaining a radio resource control status of a relay terminal;
sending second request information to an access network device based on the radio resource control status of the relay terminal, where the second request information is for requesting the access network device to configure a multi-link for the remote terminal;
sending second request information to the access network device, where the second request is used to configure a relay-based indirect link for the remote terminal; and
receiving third configuration information from the access network device, where the third configuration information is used to configure an indirect link for the remote terminal over which relay is performed via a target relay terminal, and the target relay terminal is determined by the access network device based on the second request information.

The target relay terminal is in one-to-one correspondence with the remote terminal, that is, the target relay terminal is configured to provide a relay service for the remote terminal.

In an embodiment of this application, when a radio resource control connection status of the target relay terminal is a connected state, the first request information includes an identifier of the target relay terminal; or
when a radio resource control connection status of the target relay terminal is an idle state or an inactive state, the first request information includes first indication information for requesting to configure the indirect link for the remote terminal.

Optionally, the identifier of the target relay terminal is an identifier allocated by the access network device to the target relay terminal.

In an embodiment of this application, second indication information is sent to the target relay terminal, where the second indication information indicates the target relay terminal to set up a radio resource control connection to the access network device.

In an embodiment of this application, the second indication information includes a third cause value, where the third cause value indicates the target relay terminal to provide a relay service for the remote terminal, or is used as a cause value used by the target relay terminal to set up the radio resource control connection to the access network device.

According to a sixteenth aspect, an embodiment of this application provides a link configuration method, applied to an access network device. The method includes:
receiving second request information from a remote terminal, where the second request information is for requesting the access network device to configure a relay-based indirect link for the remote terminal;
determining a target relay terminal based on the second request information;
sending third configuration information to the remote terminal, where the third configuration information is used to configure an indirect link for the remote terminal over which relay is performed via the target relay terminal; and
sending fourth configuration information to the target relay terminal, where the fourth configuration information is used to configure the indirect link.

In an embodiment of this application, when the second request information includes an identifier of the target relay terminal, the access network device determines the target relay terminal based on the identifier of the target relay terminal.

In an embodiment of this application, when the second request information includes indication information for requesting to configure the relay-based indirect link for the remote terminal, the determining a target relay terminal includes:
obtaining the target relay terminal from a core network in response to the second request information.

The target relay terminal is in one-to-one correspondence with the remote terminal.

According to a seventeenth aspect, an embodiment of this application provides a link configuration method, applied to an access network device. The method includes:
receiving second request information from a remote terminal, where the second request information is for requesting the access network device to configure a relay-based indirect link for the remote terminal;
obtaining a target relay terminal paired with the remote terminal;
sending third configuration information to the remote terminal, where the third configuration information is used to configure an indirect link for the remote terminal over which relay is performed via the target relay terminal; and
sending fourth configuration information to the target relay terminal, where the fourth configuration information is used to configure the indirect link.

According to an eighteenth aspect, an embodiment of this application provides a communication apparatus, including a processor. The processor is connected to a memory, the memory is configured to store a computer program, and the processor is configured to execute the computer program stored in the memory, to enable the apparatus to perform the methods in the first aspect to the seventeenth aspect.

According to a nineteenth aspect, an embodiment of this application provides a computer-readable storage medium. The computer-readable storage medium stores a computer program, and when the computer program runs, the methods in the first aspect to the seventeenth aspect are implemented.

According to a twentieth aspect, an embodiment of this application provides a communication system. The communication system includes a remote terminal, a relay terminal, and a network device. The remote terminal is configured to perform the foregoing method performed by the remote terminal, and the relay terminal is configured to perform the foregoing method performed by the relay terminal, the network device is configured to perform the foregoing method performed by the network device.

According to a twenty-first aspect, an embodiment of this application provides a chip, including a processor and an interface. The processor is configured to read instructions for execution.

According to a twenty-second aspect, an embodiment of this application provides a computer program product. The computer program product includes instructions, and when the instructions are run, the methods in the first aspect to the seventeenth aspect are performed.

### BRIEF DESCRIPTION OF DRAWINGS

FIG. 1 is a diagram of a communication system according to an embodiment of this application;
FIG. 2 is a diagram of link switching according to an embodiment of this application;
FIG. 3 is a diagram of a communication system according to an embodiment of this application;
FIG. 4 is a diagram of a multi-link configuration according to an embodiment of this application;
FIG. 5 is a diagram of a communication system according to an embodiment of this application;
FIG. 6 is a schematic flowchart of a link configuration method according to an embodiment of this application;
FIG. 7 is a schematic flowchart of a link configuration method according to an embodiment of this application;
FIG. 8 is a schematic flowchart of a link configuration method according to an embodiment of this application;
FIG. 9 is a schematic flowchart of a link configuration method according to an embodiment of this application;
FIG. 10 is a schematic flowchart of a link configuration method according to an embodiment of this application;
FIG. 11 is a schematic flowchart of a link configuration method according to an embodiment of this application;
FIG. 12 is a schematic flowchart of a link configuration method according to an embodiment of this application;
FIG. 13 is a schematic flowchart of a link configuration method according to an embodiment of this application;
FIG. 14 is a diagram of a remote terminal according to an embodiment of this application;
FIG. 15 is a diagram of a relay terminal according to an embodiment of this application;
FIG. 16 is a diagram of an access network device according to an embodiment of this application; and
FIG. 17 is a diagram of a communication apparatus according to an embodiment of this application.

### DESCRIPTION OF EMBODIMENTS

To facilitate understanding of this application, related technical knowledge in embodiments of this application is first described herein.

In a wireless communication system, data communication may be performed between user equipments (User Equipments, UEs) via a network device, or the communication may be directly performed between the UEs without the network device. A link between the UEs is referred to as a sidelink, and can effectively shorten a communication delay, and improve communication efficiency.

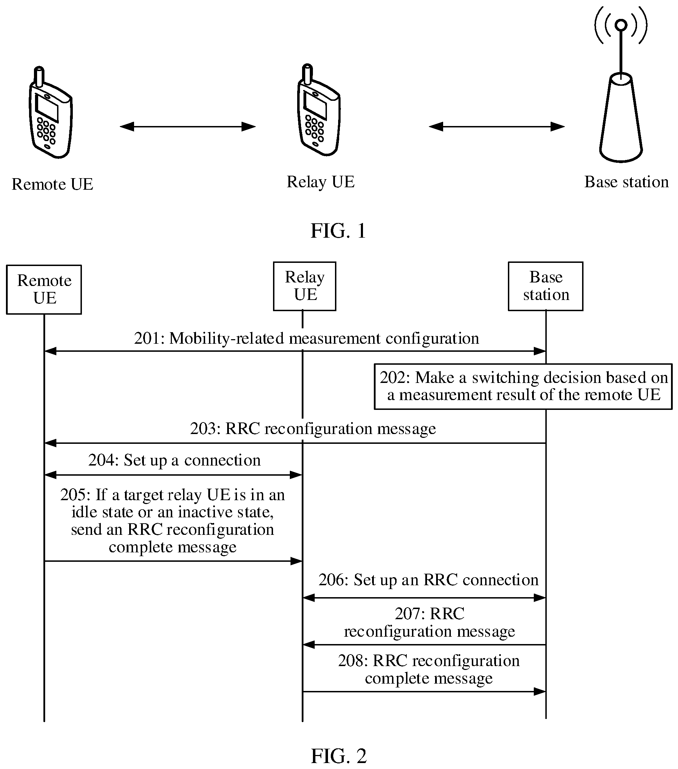

Based on this, to further expand network and sidelink coverage, improve power efficiency, and support a wider range of applications and services, 3GPP has carried out research on a sidelink relay technology in R17, and has introduced a user-to-network relay (UE-to-Network relay, U2N relay) technology. As shown in FIG. 1, in the U2N relay technology, when quality of a link between a remote (remote) UE and a base station deteriorates, the remote UE may select an appropriate relay (relay) UE, and communicate with the base station via the relay UE, to ensure service continuity.

It is specified in layer-2 user-to-network relay (Layer-2 UE-to-Network relay, L2 U2N relay) in R17 that, in a moving process, the remote UE performs link switching based on a change of link signal quality. For example, the remote UE may switch from a direct link to an indirect link. The following describes, with reference to FIG. 2, how the remote UE switches from the direct link to the indirect link.

201: The remote UE receives a mobility-related measurement configuration sent by the base station.

The remote UE receives the mobility-related measurement configuration sent by the base station. The base station configures, for the remote UE, a measurement reporting event, for example, an event Y, to limit a measurement reporting behavior of the remote UE. The event Y is defined as follows: Signal quality of a current serving cell of the remote UE is less than a threshold Y1, and signal quality of a surrounding optional relay UE on a sidelink is greater than a threshold Y2.

The remote UE receives, based on the measurement configuration from the base station by using a discovery procedure, a discovery message broadcast by the surrounding relay UE, to obtain, through measurement, sidelink discovery reference signal received power (Sidelink Discovery Reference Signal Received Power, SD-RSRP) of the surrounding relay UE, that is, signal quality of the surrounding relay UE on a sidelink; and reports an appropriate surrounding relay UE to the base station in a measurement result based on the SD-RSRP of the surrounding relay UE.

202: The base station makes a switching decision based on a measurement result of the remote UE.

Specifically, the measurement result reported by the remote UE includes a source L2 ID of the surrounding relay UE, an SD-RSRP measurement result, and serving cell ID information of the surrounding relay UE. Then, the base station selects, from the reported surrounding relay UE based on the measurement result, a target relay UE for the remote UE, and determines an RRC configuration of the remote UE. The target relay UE selected by the base station may be in a connected state (CONNECTED), or may be in a non-connected state, that is, an idle state (IDLE) or an inactive state (INACTIVE).

203: The base station sends an RRC reconfiguration message to the remote UE.

The RRC reconfiguration message includes the RRC configuration of the remote UE. The RRC configuration includes a source L2 ID of the target relay UE, an end-to-end bearer configuration between the remote UE and the base station, an RLC bearer configuration between the remote UE and the target relay UE, a sidelink relay adaptation protocol (Sidelink Relay Adaptation Protocol, SRAP) configuration of the remote UE, and the like.

204: The remote UE sets up a connection to the target relay UE.

If the remote UE has not set up the connection to the target relay UE, after the remote UE receives the RRC reconfiguration message delivered by the base station, the remote UE sets up the connection to the relay UE, that is, the remote UE sets up a PC5 connection to the target relay UE.

205: If the target relay UE is in the idle state or the inactive state, the remote UE sends an RRC reconfiguration complete message to the relay UE, to trigger the target relay UE to enter the connected state.

If the target relay UE is in the idle state or the inactive state, the base station cannot directly send the RRC reconfiguration message to the target relay UE. Therefore, the target relay UE first needs to be triggered to enter the connected state. It is specified in a protocol that, the remote UE sends, to the target relay UE, the RRC reconfiguration complete message, for example, an SRB 1, to trigger the target relay UE to enter the connected state.

It should be noted that the remote UE sends the RRC reconfiguration message to the relay UE through a PC5 interface, that is, over a 3GPP link.

Specifically, the remote UE sends the RRC reconfiguration complete message to the target relay UE by using a sidelink radio link control (Radio Link Control, RLC) RLC bearer that is configured by default, that is, a sidelink radio link control bearer 1 (Sidelink Radio Link Control-1, SL-RLC 1), to trigger the target relay UE to enter the connected state.

206: The target relay UE receives the RRC reconfiguration message from the remote UE, and enters the connected state.

207: The base station sends an RRC reconfiguration message to the relay UE.

The RRC reconfiguration message includes a link parameter needed for the remote UE to perform indirect link communication.

208: The relay UE sends an RRC reconfiguration complete message to the base station.

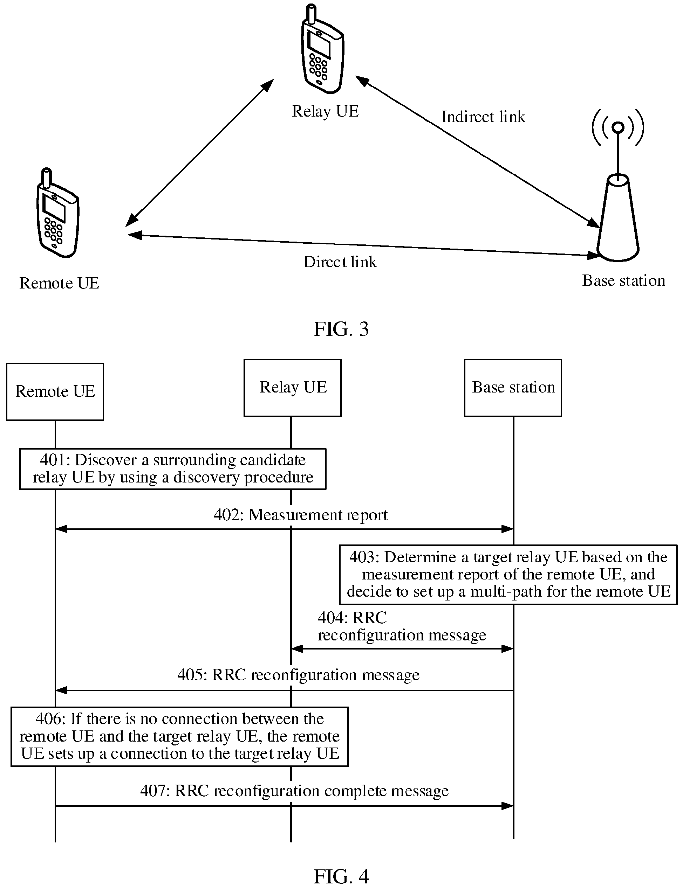

As an evolution of a sidelink relay in R17, 3GPP has set up an R18 sidelink relay enhancement project in R18. A sub-research direction of R18 sidelink relay enhancement is a multi-link relay (multi-path Relay). A communication system architecture of the R18 multi-path relay is shown in FIG. 3. In addition to supporting setup of a relay link via a relay UE, setting up a connection to a base station through a Uu interface by a remote UE is further supported. This is based on a multi-path relay technology. As shown in FIG. 3, two communication links may be simultaneously set up between the remote UE and the base station. One is a direct link (direct link) over which the remote UE directly communicates with the base station through the Uu interface, and the other is an indirect link (indirect link) over which the remote UE communicates with the base station via a relay of the relay UE. Such a scenario in which the communication is performed over the two links may also be referred to as UE (aggregation) aggregation. Therefore, in the UE aggregation scenario, the remote UE may simultaneously receive and send same data or different data on the two links, to improve a throughput and reliability of data receiving and sending.

In the R18 project, the remote UE and the relay UE may communicate with each other through a sidelink connection, that is, over a 3GPP link, or may communicate with each other over a non-3GPP link. For example, the remote UE and the relay UE may communicate with each other over the non-3GPP link such as a wired link, a Wi-Fi link, or a Bluetooth link.

Because the two links may be set up between the remote UE and the base station, if a specific remote UE currently has only a direct link connection to the base station, when the remote UE has a communication requirement for setting up a multi-path, the base station may additionally set up an indirect link for the remote UE. The following describes, with reference to FIG. 4, a possible process in which a base station sets up an indirect link for a remote UE.

401: The remote UE discovers a surrounding candidate relay UE by using a discovery procedure.

402: The remote UE sends a measurement report to the base station based on a configuration of the base station.

The measurement report includes a source L2 ID of the candidate relay UE, ID information of a cell in which the candidate relay UE is located, and SD-RSRP between the remote UE and the candidate relay UE.

403: The base station determines a target relay UE based on the measurement report of the remote UE, and decides to set up a multi-path for the remote UE.

404: The base station sends an RRC reconfiguration message to the relay UE.

405: The base station sends an RRC reconfiguration message to the remote UE.

406: If there is no connection between the remote UE and the target relay UE, the remote UE sets up a connection to the target relay UE.

It should be noted that, in a process of configuring the multi-path for the remote UE, the remote UE may always maintain a direct communication link between the remote UE and the base station.

407: The remote UE sends an RRC reconfiguration complete message to the base station, to indicate that the configuration is completed.

It can be learned that, in FIG. 2, when the target relay UE configured by the base station for the remote UE is in an idle state or an inactive state, the remote UE sends the RRC reconfiguration complete message to the relay UE, to trigger the relay UE to enter a connected state, that is, the remote UE triggers, over a 3GPP link, the relay UE to enter the connected state. However, in the UE aggregation scenario shown in FIG. 3, the remote UE and the relay UE may communicate with each other over a non-3GPP link. Therefore, a solution in which the RRC reconfiguration complete message is sent to the target relay UE over the 3GPP link to trigger the target relay UE to enter the connected state is not applicable to the UE aggregation scenario. Further, when switching to the indirect link is performed in R17, and the remote UE triggers the relay UE to enter the connected state, the remote UE sends the RRC reconfiguration complete message to the base station via the relay UE. However, in the UE aggregation scenario, when a multi-link is configured for the remote UE, the RRC reconfiguration complete message from the remote UE is not necessarily sent to the base station via the relay UE.

Therefore, an existing manner of triggering the target relay UE in IDLE or INACTIVE to enter the connected state in R17 cannot adapt to a scenario in which the multi-link is set up for the remote UE. In addition, currently, a pairing relationship between the remote UE and the relay UE is fixed. Therefore, a procedure in which the base station selects the target relay UE for the remote UE, and configures the remote UE having only a direct link to have the multi-path is not completely the same as the manner shown in FIG. 4. For example, at least the remote UE no longer needs to determine the surrounding relay UE by using the discovery procedure. Therefore, how to use the pairing relationship between the remote UE and the relay UE and how to redesign the configuration of the multi-path for the remote UE are still in a blank phase.

Therefore, in the UE aggregation scenario, both how to trigger the relay UE in the idle state or the inactive state to enter the connected state and how to select the relay UE as the target relay UE to configure the multi-link for the remote UE are currently in a blank phase, and are technical problems that urgently need to be resolved currently.

The technical solutions in embodiments of this application may be applied to various communication systems, for example, a 4th generation (4th generation, 4G) communication system, a 5th generation (5th generation, 5G) mobile communication system, and a future mobile communication system.

For example, both the remote UE and the relay UE in embodiments of this application may be user equipments (User Equipments, UEs). The user equipment may be a device that provides a user with voice and/or data connectivity, for example, may include a handheld device with a wireless connection function, or a processing device connected to a wireless modem. The UE may communicate with a core network via a radio access network (radio access network, RAN), and exchange voice and/or data with the RAN. The UE may include a wireless user equipment, a mobile user equipment, a device-to-device (device-to-device, D2D) communication user equipment, a vehicle-to-everything (vehicle-to-everything, V2X) user equipment, a machine-to-machine/machine-type communications (machine-to-machine/machine-type communication, M2M/MTC) user equipment, an internet of things (internet of things, IoT) user equipment, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the UE may include a mobile phone (or referred to as a "cellular" phone), a computer having mobile user equipment, a portable, pocket-sized, handheld, or computer-built-in mobile apparatus, or the like. For example, the UE may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The UE may further include a limited device, for example, a device with low power consumption, a device with a limited storage capability, or a device with a limited computing capability. For example, the UE includes an information sensing device such as a barcode, radio frequency identification (radio frequency identification, RFID), a sensor, a global positioning system (global positioning system, GPS), or a laser scanner.

By way of example, and not limitation, in embodiments of this application, the UE may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

However, if the various UEs described above are located in a vehicle (for example, placed in the vehicle or mounted in the vehicle), the UEs may be all considered as vehicle-mounted user equipments. For example, the vehicle-mounted user equipments are also referred to as on-board units (on-board units, OBUs). This is not limited in embodiments of this application.

Further, the remote UE and the relay UE in this application may alternatively be two communication modules in a same device, for example, two SIM cards.

With reference to the foregoing forms of the remote UE and the relay UE, a typical application scenario in this application may be that the remote UE is a vehicle-mounted device, and the relay UE may be a user terminal; or the remote UE and the relay UE may be two cameras on a vehicle, or the like. The forms of the remote UE and the relay UE are not limited in this application.

Embodiments of this application further relate to a network device, for example, may be an access network (Access network, AN) device. The AN device may be a device that communicates with the wireless user equipment over an air interface in the access network via one or more cells, for example, a base station NodeB (for example, an access point). The NodeB may be configured to perform mutual conversion between a received over-the-air frame and an internet protocol (IP) packet, and serve as a router between the UE and a remaining part of the access network. The remaining part of the access network may include an IP network. For example, the NodeB may be an evolved NodeB (NodeB, eNB, or e-NodeB, evolved NodeB) in a long term evolution (long term evolution, LTE) system or a long term evolution-advanced (long term evolution-advanced, LTE-A) system; or may include a new radio network device gNB in a 5th generation (5th generation, 5G) mobile communication technology NR system. The AN device may alternatively be an access network device in a vehicle-to-everything (Vehicle-to-Everything, V2X) technology, which is a road side unit (road side unit, RSU). The RSU may be a fixed infrastructure entity that supports a V2X application, and may exchange messages with another entity that support the V2X application. In addition, the AN device may further include a central unit (central unit, CU) and a distributed unit (distributed unit, DU) in a cloud radio access network (cloud radio access network, Cloud RAN) system. In this case, the AN device coordinates attribute management on air interfaces. The AN device is not limited in embodiments of this application.

First, it is noted that the technical solutions of this application are mainly applied to a UE aggregation scenario. In this scenario, the remote UE may also be referred to as a service terminal/service user (Service UE, SUE), and the relay UE may also be referred to as a collaborative terminal or a collaborative user (Collaborative UE, CUE). The remote UE and the relay UE are used for unified description in this application. The remote UE and the relay UE may be connected over a 3GPP link, or may be connected over a non-3GPP ideal link. For example, the remote UE and the relay UE may communicate with each other over an ideal link such as a wired link, a Wi-Fi link, or a Bluetooth link.

In addition, the multi-link and the multi-path described in this application are essentially consistent. Therefore, configuring the multi-link for a remote terminal may also be understood as configuring the multi-path. It should be noted that, in this application, configuring the multi-link for the remote terminal is actually configuring, for the remote terminal, an indirect link over which the remote terminal communicates with the access network device via the relay and a direct link over which the remote terminal directly communicates with the access network device.

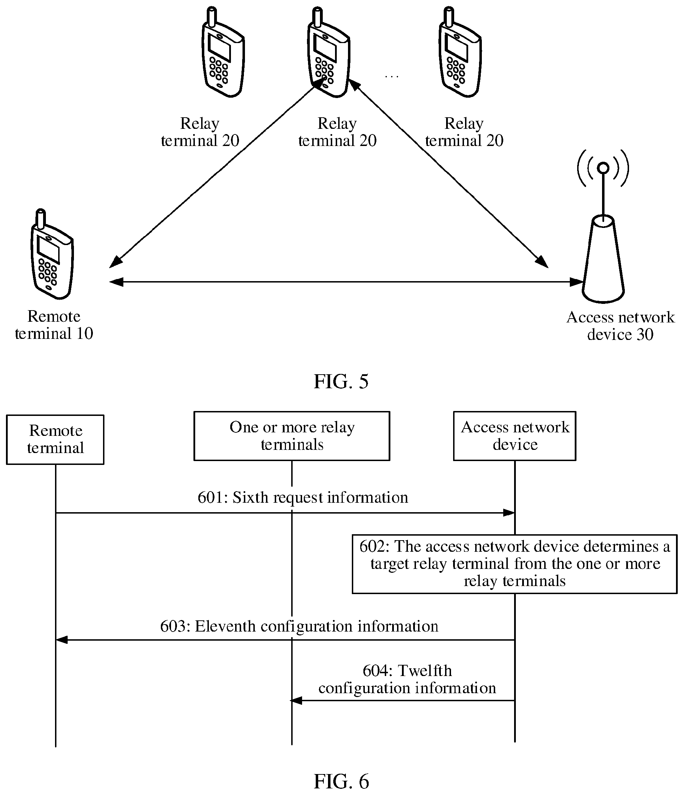

FIG. 5 shows a communication system according to an embodiment of this application. The communication system includes a remote terminal 10, one or more relay terminals 20, and an access network device 30. The one or more relay terminals 20 are relay terminals paired with the remote terminal 10. That is, any one of the one or more relay terminals 10 may be used as a target relay terminal of the remote terminal 10, to provide a relay service for the remote terminal. Further, a radio resource control (Radio Resource Control, RRC) status of the any one relay terminal 20 may be a connected state, or may be an idle state or INACTIVE, namely, an inactive state. This application focuses on a case in which the RRC status of the relay terminal 20 is a non-connected state.

Based on the communication system shown in FIG. 5, in an implementation of this application, the remote terminal 10 sends first indication information to one or more relay terminals, where the first indication information indicates the one or more relay terminals 20 to set up a radio resource control connection to the access network device. Correspondingly, the one or more relay terminals 20 set up the RRC connection to the access network device, and obtain an identifier allocated by the access network device 30. Then, the one or more relay terminals 20 send, to the remote terminal 10, the identifier allocated by the access network device. After obtaining the identifier of the one or more relay terminals, the remote terminal sends first request information to the access network device 30, where the first request information includes the identifier of the one or more relay terminals 20, and the first request information is for requesting the access network device 30 to configure a relay-based indirect link for the remote terminal. Correspondingly, after receiving the first request information, the access network device determines the target relay terminal from the one or more relay terminals 20, and sends first configuration information to the remote terminal 10, where the first configuration information is used to configure the indirect link for the remote terminal 10 over which relay is performed via the target relay terminal. In addition, the first configuration information may further include configuration information of the remote terminal 10 on a direct link, to reconfigure the original direct link of the remote terminal 10. In addition, the access network device 30 also sends second configuration information to the target relay terminal, where the second configuration information is used to configure the foregoing indirect link. Finally, the remote terminal 10 may communicate with the access network device based on the first configuration information over the indirect link of the target relay terminal. In addition, the remote terminal directly communicates with the access network device over a direct link.

It can be learned that, in this embodiment, when the remote terminal 10 decides to configure a multi-link, the remote terminal 10 first sends the first indication information to the one or more paired relay terminals 20, and triggers, in advance by using the first indication information, the relay terminal to enter the connected state, then, the relay terminal sends, to the remote terminal, the identifier for setting up the connected state, and the remote terminal reports the identifier to the access network device. In this way, the access network device may configure the target relay terminal for the remote terminal from the one or more relay terminals in the connected state, to set up the indirect link. This compensates for a technical gap of how to configure the multi-link for the remote terminal when the relay terminal is in the idle state or the inactive state in the conventional technology.

Based on the communication system shown in FIG. 5, in another implementation of this application, the remote terminal 10 obtains an RRC connection status of the one or more relay terminals 20; and then, the remote terminal 10 sends second request information to the access network device based on the radio resource control connection status of the one or more relay terminals, where the second request information is for requesting the access network device 30 to configure a relay-based indirect link for the remote terminal 10. Correspondingly, after obtaining the second request information, the access network device 30 determines, based on the second request information, the one or more relay terminals 20 paired with the remote terminal. Then, the access network device 30 determines a target relay terminal from the one or more relay terminals 20. Finally, the access network device 30 sends third configuration information to the remote terminal 10, where the third configuration information is used to configure an indirect link for the remote terminal over which relay is performed via the target relay terminal. Certainly, the third configuration information further includes configuration information of the remote terminal on a direct link, to reconfigure the original direct link of the remote terminal. In addition, the access network device 30 also sends fourth configuration information to the target relay terminal, where the fourth configuration information is used to configure the foregoing indirect link. Finally, the remote terminal 10 may communicate with the access network device 30 based on the third configuration information over the indirect link of the target relay terminal. In addition, the remote terminal directly communicates with the access network device over a direct link.

FIG. 6 is a schematic flowchart of a link configuration method according to an embodiment of this application. The method is applied to the communication system shown in FIG. 5. The method includes but is not limited to content in the following steps.

601: A remote terminal sends sixth request information to an access network device.

It should be noted that, before sending the sixth request information, the remote terminal decides that the access network device needs to be requested to configure a multi-link (multi-path) for the remote terminal. Optionally, the remote terminal decides, based on a relationship between a communication status of the remote terminal and a threshold, to request the access network device to configure an indirect link for the remote terminal, that is, to configure the multi-link, where the threshold is determined by the remote terminal or the access network device. The communication status includes one or more of the following: an uplink rate, uplink bandwidth, a packet loss rate, and signal quality of a direct link.

For example, the relationship between the communication status and the threshold includes one or more of the following: The uplink rate is less than a first threshold; the uplink bandwidth is less than a second threshold; the packet loss rate is greater than a third threshold; and the signal quality of the direct link is less than a fourth threshold. The first threshold, the second threshold, the third threshold, and the fourth threshold are determined by the remote terminal, and specifically, may be determined by an application layer of the remote terminal, or may be determined by an access stratum (Access stratum, AS stratum) of the remote terminal based on implementation.

Optionally, the remote terminal side autonomously decides that the multi-link needs to be configured.

Specifically, when autonomously sensing that a current communication status cannot meet an upper-layer service requirement, or reliability of data transmission cannot meet a service requirement, the remote terminal autonomously decides that the multi-link needs to be configured.

For example, when a preset condition is the uplink rate, and the remote terminal monitors a current uplink rate, and autonomously senses that the uplink rate is low, that is, the uplink rate is less than the first threshold, the remote terminal decides that the multi-link needs to be configured.

Optionally, when the remote terminal decides that the multi-link needs to be configured, the remote terminal side and the access network device side may cooperate with each other.

For example, the access network device may configure a corresponding threshold for each preset condition. That is, the first threshold, the second threshold, the third threshold, and the fourth threshold are configured by the access network device. Specifically, the remote terminal monitors the current communication status. When detecting that the communication status exceeds the threshold configured by the access network device, the remote terminal decides that the multi-link needs to be configured.

It should be noted that a part of the first threshold, the second threshold, the third threshold, and the fourth threshold may be autonomously determined by the remote terminal, and the other part may be configured by the access network device.

In another possible implementation, the first threshold, the second threshold, the third threshold, and the fourth threshold may alternatively be predefined in a protocol.

Optionally, that the remote terminal decides that the multi-link needs to be configured may be implemented based on an indication of the access network device.

For example, the access network device may monitor the communication status of the remote terminal. When detecting that the communication status meets the foregoing preset condition, the access network device sends indication information to the remote terminal, where the indication information indicates that the multi-link needs to be configured for the remote terminal. Correspondingly, after receiving the indication information, the remote terminal determines that the multi-link needs to be configured. Correspondingly, the remote terminal may report information about a relay terminal based on the indication of the access network device, to configure the multi-link.

For example, the foregoing one or more relay terminals are all relay terminals paired with the remote terminal.

Specifically, when deciding that the multi-link needs to be configured, the remote terminal may obtain all candidate relay terminals paired with the remote terminal, and use all the candidate relay terminals as the one or more relay terminals. In other words, the remote terminal does not distinguish between and filter the paired candidate relay terminals.

For example, the one or more relay terminals are selected by the remote terminal from a candidate relay terminal based on information about all the candidate relay terminals and/or a radio resource control status of each relay terminal; and the information about the candidate relay terminals includes one or more of load, a remaining battery level, and Uu interface connection quality of the candidate relay terminals.

Optionally, the remote terminal may obtain an RRC status of each candidate relay terminal and/or a performance status of each terminal over a communication link between the remote terminal and each candidate relay terminal. The communication link between the remote terminal and each candidate relay terminal may be a 3GPP link (for example, a sidelink) or a non-3GPP link. This is not limited in this application.

Optionally, the remote terminal may select N candidate relay terminals with better performance statuses from all the candidate relay terminals as a relay terminal, to obtain the one or more relay terminals.

Optionally, the remote terminal may use, as the relay terminal, a candidate relay terminal whose RRC status is a non-connected state in the candidate relay terminals, to obtain the one or more relay terminals.

Optionally, the remote terminal may use, as a relay terminal, a candidate relay terminal whose performance status meets a condition in the candidate relay terminals, to obtain the one or more relay terminals. For example, when the performance status is the load, a candidate relay terminal whose load is less than a fifth threshold may be used as the relay terminal.

Optionally, the remote terminal may alternatively use, as the relay terminal, a candidate relay terminal whose RRC status is the non-connected state and whose performance status meets the condition in all the relay terminals, to obtain the one or more relay terminals.

During actual application, the remote terminal may alternatively select the one or more relay terminals from the paired relay terminals in another manner. This is not limited in this application. In this application, an example in which the remote terminal selects all the relay terminals as the relay terminals is mainly used for description. That is, the remote terminal sends the sixth request information to all the paired candidate relay terminals.

It should be noted that, when a quantity of all the candidate relay terminal paired with the remote terminal is only one, the remote terminal may directly use the candidate remote terminal as the relay terminal, and does not perform filtering; or whether to use the candidate relay terminal as the relay terminal may be determined in the foregoing selection manner. It may be understood that, if the candidate relay terminal is not used as the relay terminal in the foregoing selection manner, that is, there is no terminal suitable for serving as a relay for the candidate remote terminal in this case, the remote terminal does not send the sixth request information to the access network device, and does not request the access network device to configure the multi-link, that is, setup of the multi-link is abandoned.

The sixth request information includes an identifier of the one or more relay terminals and/or sixth indication information, and the sixth request information is for requesting the access network device to configure the multi-link for the remote terminal. The sixth indication information may be 1-bit indication information, a default value, or the like.

Optionally, the sixth request information is for requesting the access network device to configure the multi-link for the remote terminal.

Specifically, when the sixth request information includes the sixth indication information, the remote terminal may request, by using the sixth request information, the access network device to configure the multi-link for the remote terminal. For example, the sixth request information is information dedicated for requesting to configure the multi-link. When receiving the sixth request information, the access network device may determine that the multi-link needs to be configured for the remote terminal. When the sixth request information includes the identifier of the one or more relay terminals, the remote terminal may request, by using the identifier of the one or more relay terminals, the access network device to configure the multi-link for the remote terminal. For example, some special terminal identifiers may be specified to request to configure the multi-link. Therefore, when determining to configure the multi-link by using the one or more relay terminals, the remote terminal may send the identifier (namely, the special identifier) of the one or more relay terminals to the access network device. In this way, the access network device may configure the multi-link for the remote terminal based on the identifier of the one or more relay terminals. When the sixth request information includes the identifier of the one or more relay terminals and the sixth indication information, the remote terminal requests, by using the sixth indication information, the access network device to configure the multi-link, and indicates, by using the identifier of the one or more relay terminals, the access network device to determine a target relay terminal from the one or more relay terminals. For example, the remote terminal may reuse an existing message, for example, includes the identifier of the one or more relay terminals and the sixth indication information in an RRC message. In this way, after receiving the RRC message, the access network device may determine the target relay terminal from the one or more relay terminals to configure the multi-link for the remote terminal.

602: The access network device determines the target relay terminal from the one or more relay terminals.

It should be noted that, if the sixth request information includes the identifier of the one or more relay terminals, the access network device may directly determine the target relay terminal from the one or more relay terminals based on the identifier of the one or more relay terminals. If first indication information does not include the identifier of the one or more relay terminals, the access network device needs to first determine the one or more relay terminals, and then determine the target relay terminal from the one or more relay terminals. The following describes in detail how to determine the one or more relay terminals, and details are not described herein.

603: The access network device sends eleventh configuration information to the access network device, where the eleventh configuration information is used to configure an indirect link for the remote terminal over which the remote terminal communicates with the access network device via the target relay terminal.

The eleventh configuration information is used to configure the indirect link for the remote terminal over which the remote terminal communicates with the access network device via the target relay terminal. Optionally, the eleventh configuration information may alternatively include reconfiguration information of a direct link over which the remote terminal directly communicates with the access network device.

For example, the eleventh configuration information includes a correspondence between a radio bearer, a direct link, and an indirect link, that is, indicates specific radio bearer data of a remote UE whose transmission is to be performed over the direct link and specific radio bearer data of the remote UE whose transmission is to be performed over the indirect link; and includes an end-to-end PDCP layer configuration parameter, an RLC bearer configuration between the remote UE on the direct link and a base station, and the like.

Especially, when there are a plurality of relay terminals paired with the remote terminal, that is, there are a plurality of one or more relay terminals, if the access network device configures only a link parameter for the remote terminal, the remote terminal does not know a specific target relay terminal selected by the access network device, and therefore cannot know a specific relay terminal used to perform communication over the indirect link. Therefore, the eleventh configuration information further includes an identifier of the target relay terminal. That is, the access network device indicates, by using the identifier of the target relay terminal, a specific relay terminal selected by the remote terminal to perform communication over the indirect link.

604: The access network device sends twelfth configuration information to the target relay terminal, where the twelfth configuration information is used to configure the indirect link.

The twelfth configuration information is used to configure, on the target relay terminal side for the remote terminal, the indirect link over which the remote terminal communicates with the base station via the target relay terminal.

For example, the twelfth configuration information includes a mapping relationship between a radio bearer of the remote UE and a user equipment relay radio bearer channel (Uu relay RLC channel) on a Uu interface, and a configuration parameter of the Uu relay RLC channel.

Especially, when one relay UE may provide relay for a plurality of remote terminals, if only a link parameter is configured for the target relay terminal, the target relay terminal does not know a specific remote terminal for which the link parameter is used to perform relay. Therefore, the twelfth configuration information includes an identifier of the remote terminal. The access network device configures the identifier of the remote terminal for the target relay terminal, and may indicate, by using the identifier of the remote terminal, a specific remote terminal whose relay is the target relay terminal. In this way, when performing relay for one of the remote terminals, the target relay terminal may perform relay by using a link parameter corresponding to the remote terminal.

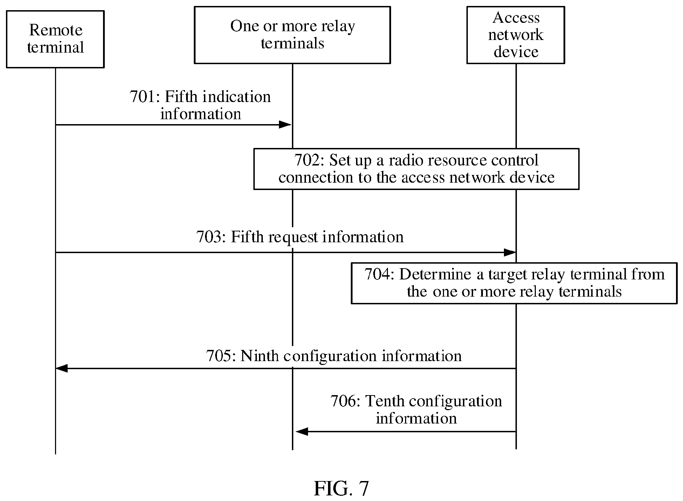

FIG. 7 is a schematic flowchart of a link configuration method according to an embodiment of this application. The method is applied to the communication system shown in FIG. 5. Content that is in this embodiment and that is the same as content shown in FIG. 6 is not described again in this embodiment. The method includes but is not limited to content in the following steps.

701: A remote terminal separately sends fifth indication information to one or more relay terminals, where the fifth indication information indicates the one or more relay terminals to set up a radio resource control connection to an access network device.

Similarly, before separately sending the fifth indication information to the relay terminal, the remote terminal also needs to decide to request the access network device to configure a multi-link. For details. Refer to a process in which the remote terminal decides that the multi-link needs to be configured in step 601. Details are not described again.

702: The one or more relay terminals set up the radio resource control connection to the access network device.

First, it is noted that in a possible implementation, some of all relay terminals paired with the remote terminal are already in a connected state before the remote terminal sends the fifth indication information. Therefore, the one or more relay terminals determine, based on the RRC status of the relay terminal, whether to set up the RRC connection to the access network device.

Specifically, if a specific relay terminal has set up an RRC connection to the access network device before receiving the fifth indication information, after receiving the fifth indication information, the relay terminal only needs to continue to maintain the RRC connection to the access network device, and does not need to set up the RRC connection to the access network device. If the relay terminal does not set up an RRC connection to the access network device before receiving the fifth indication information, that is, the relay terminal is in an idle state or an inactive state, the relay terminal sets up the RRC connection to the access network device after receiving the fifth indication information.

The following uses any relay terminal in the idle state or the inactive state as an example, to describe a process of setting up an RRC connection to the access network device by the relay terminal in this application.

For example, after receiving the fifth indication information, the relay terminal sets up the RRC connection to the access network device based on an RRC setup procedure in 3GPP. Specifically, the relay terminal first sends a radio resource control setup request (RRC Setup Request) message to the access network device, to request to set up the RRC connection to the access network device. Then, the access network device returns an RRC connection setup (RRC setup) message to the relay terminal, to set up the RRC connection to the relay terminal. Finally, the relay terminal feeds back a radio resource control setup complete (RRC Setup Complete) message to the access network device, to notify the access network device that RRC setup is completed.

Currently, when the terminal sets up the RRC connection to the access network device, the terminal configures a cause value (cause value) in the RRC setup request message, and the cause value indicates a reason why the terminal sets up the RRC connection to the access network device. For example, when the cause value included by the terminal is emergency, it indicates that the reason that the terminal sets up RRC is an emergency service requirement. In comparison with an existing RRC setup process, in this application, the relay terminal sets up the RRC connection to serve as a relay of the remote terminal, to forward signaling or data of the remote terminal. Therefore, to adaptively explain an objective of setting up the RRC connection by the relay terminal, this application provides a rule for setting the cause value by the relay terminal. Therefore, in a process of setting up the RRC connection to the access network device by the relay terminal mentioned in this application, the cause value needs to be carried in an RRC setup request. For a cause value mentioned subsequently, refer to a process of setting the cause value herein.

The following describes the process in which the relay terminal sets the cause value in this application.

Optionally, the relay terminal configures the cause value in the RRC setup request message based on the indication of the remote terminal. Specifically, before the relay terminal sets up the RRC connection to the access network device, the remote terminal first generates a cause value. For example, the remote terminal may select a cause value from a plurality of candidate cause values or from cause values defined in an existing protocol. Then, the remote terminal sends the cause value to the relay terminal. After receiving the cause value indicated by the remote terminal, the relay terminal configures the cause value as the cause value in the RRC setup request message. For example, the remote terminal may include the cause value in the fifth indication information, that is, send the cause value to the remote terminal by using the fifth indication information.

Optionally, the relay terminal autonomously configures the cause value in the RRC setup request message. Specifically, when sending the RRC setup request, the remote terminal autonomously selects a cause value from the cause values defined in the existing protocol, and uses the cause value as the cause value in the RRC setup request message. For example, a fixed cause value is always used each time. Alternatively, a cause value is selected from the plurality of candidate cause values or from the cause values defined in the existing protocol as the cause value.

When the relay terminal autonomously configures the cause value in the RRC setup request message, in an implementation, if the relay terminal receives the cause value indicated by the remote terminal, the relay terminal may completely ignore the indication of the remote terminal, and autonomously configure the cause value, that is, the relay terminal determines a cause value from the plurality of candidate cause values. In a possible implementation, if the relay terminal receives the cause value indicated by the remote terminal, the relay terminal first determines whether the cause value indicated by the remote terminal is a specific cause value. If the cause value indicated by the remote terminal is the specific cause value, the cause value indicated by the remote terminal is set as the cause value in the RRC setup request message. If the cause value indicated by the remote terminal is not the specific cause value, the indication of the remote terminal is allowed to be ignored, and the relay terminal autonomously selects a cause value from the cause values defined in the existing protocol, and sets the cause value in the RRC setup request message.

The specific cause value may be the cause value indicating the emergency service requirement. For example, the specific cause value includes but is not limited to emergency, mps-PriorityAccess, or mcs-PriorityAccess sent by the remote terminal to the relay terminal.

For example, the plurality of candidate cause values include but are not limited to:
emergency, highPriorityAccess, mt-Access, mo-Signalling, mo-Data, mo-VoiceCall, mo-VideoCall, mo-SMS, mps-PriorityAccess, mcs-PriorityAccess, spare1, spare2, sspare3, spare4, spare5, and spare6.

In an implementation, a new cause value is specially defined, to indicate that a reason why the relay UE sets up the RRC connection is to provide a relay service for the remote UE or set up a multi-path for the remote UE.

It should be noted that an objective of the relay terminal to perform the RRC connection to the access network device is mainly to serve as the relay of the remote terminal, to forward the signaling or the data of the remote terminal, that is, not to perform transmission of service data of the relay terminal. Therefore, after setting up the RRC connection, the relay terminal needs to skip unified access control (Unified access control, UAC). That is, the relay terminal does not determine, based on a system message, whether the relay terminal can access the access network device or a cell served by the access network device, to ensure that the relay terminal can successfully access the access network device, so that the data or the signaling of the remote terminal may be forwarded.

It may be understood that a UAC process needs to be skipped in a subsequently mentioned process of setting up the RRC connection to the access network device by the relay terminal.

703: The remote terminal sends fifth request information to the access network device.

First, it is noted that in this embodiment, the access network device may obtain pairing information between the remote terminal and the relay terminal. Therefore, in this embodiment, the fifth indication information may be indication information. For example, the indication information may be 1-bit indication information or a default value. That is, the fifth request information may not carry an identifier of the relay terminal, and the remote terminal only requests the access network device to configure the multi-link for the remote terminal. Therefore, how the access network device autonomously obtains the one or more relay terminals paired with the remote terminal is described in detail in this embodiment of this application.

It should be noted that, in this implementation, step 701 and step 703 may be performed in parallel, and there is no sequence of performing the two steps. That is, when triggering the relay terminal to enter the connected state, the remote terminal may request the access network device to configure the multi-link for the remote terminal.

704: The access network device determines a target relay terminal from the one or more relay terminals.

After obtaining the fifth request information, the access network device may obtain all the relay terminals paired with the remote terminal. When a relay terminal that is triggered by the remote terminal to enter the connected state is all the paired relay terminals, all the paired relay terminals determined by the access network device are the one or more relay terminals. All the paired relay terminals and the one or more relay terminals are consistent, and are not distinguished.

For example, the access network device may obtain, from a core network, the one or more relay terminals paired with the remote terminal. For example, the core network stores pairing information between each remote UE and each relay UE, that is, pairing information between an identifier of the remote UE and an identifier of the relay UE paired with the remote UE. The identifier of the remote UE and the identifier of the relay UE include but are not limited to a subscription concealed identifier (Subscription Concealed Identifier, SUCI) and a subscription permanent identifier (subscription permanent identifier, SUPI). Therefore, the access network device may obtain, from the core network based on the identifier of the remote terminal, the one or more relay terminals paired with the remote terminal.

Further, the access network device may determine the target relay terminal based on information about each relay terminal. For example, a relay terminal with a best performance status may be used as the target relay terminal.

Optionally, after setting up an RRC connection to each relay terminal, the access network device may obtain the information about each relay terminal from each relay terminal by using an RRC message.

705: The access network device sends ninth configuration information to the remote terminal.

For content of the ninth configuration information, refer to content carried in the eleventh configuration information in step 603. Details are not described herein again.

706: The access network device sends tenth configuration information to the target relay terminal.

For content of the ninth configuration information, refer to content carried in the twelfth configuration information in step 604. Details are not described herein again.

In an implementation of this application, after determining the target relay terminal, the access network device may release an RRC connection to a relay terminal other than the target relay terminal in the one or more relay terminals. Further, the access network device may determine, based on a service status of the relay terminal other than the target relay terminal in the one or more relay terminals, whether to release the RRC connection to the relay terminal. For example, when the relay terminal currently has a service transmission requirement, the RRC connection to the relay terminal may not be released. When the relay terminal currently has no service transmission requirement, the RRC connection to the relay terminal is released.

It should be noted that, subsequently, the relay terminal sets up an RRC connection to the access network device. If the relay terminal is not the target relay terminal, the access network device also determines, based on the service status of the relay terminal, whether to set up the RRC connection to the relay terminal. Details are not described subsequently.

It should be noted that FIG. 7 shows a manner in which the remote terminal configures the multi-link, where the remote UE requests a configuration procedure, and only requests to configure the multi-link, and the remote UE does not need to report the relay UE paired with the remote UE. This mainly depends on that the access network device can directly obtain the pairing information between the remote UE and the relay UE. The following describes a process of configuring the multi-link if the remote UE reports the relay UE paired with the remote UE.

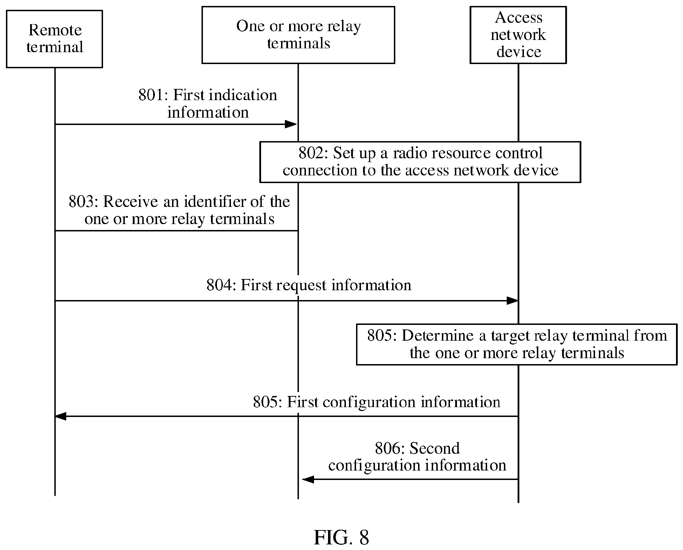

FIG. 8 is a schematic flowchart of a link configuration method according to an embodiment of this application. Content that is in this embodiment and that is the same as content shown in FIG. 6 and FIG. 7 is not described again. The method is applied to the communication system shown in FIG. 5. The method includes but is not limited to content in the following steps.

801: A remote terminal sends first indication information to one or more relay terminals, where the first indication information indicates the one or more relay terminals to set up a radio resource control connection to an access network device.

First, it is noted that, before sending the first indication information to the one or more relay terminals, the remote terminal also first selects the one or more relay terminals from a candidate terminal paired with the remote terminal.

For example, the remote terminal obtains a radio resource control connection status of a candidate relay terminal paired with the remote terminal and/or information about the candidate relay terminal, where the information about the candidate relay terminals includes one or more of load, a remaining battery level, and user equipment interface connection quality of the candidate relay terminal; and determines the one or more relay terminals from the candidate relay terminal based on the radio resource control connection status of the candidate relay terminal and/or the information about the candidate relay terminal. For details, refer to content in step 601. Details are not described again.

Similarly, the remote terminal also first decides to request to configure a multi-link for the remote terminal. For example, the remote terminal decides, based on a relationship between a communication status of the remote terminal and a threshold, to request the access network device to configure an indirect link for the remote terminal, where the threshold is determined by the remote terminal or the access network device, and the communication status includes one or more of the following: an uplink rate, uplink bandwidth, a packet loss rate, and signal quality of a direct link. Similarly, refer to content in step 601. Details are not described again.

802: The one or more relay terminals set up the radio resource control connection to the access network device.

For a process in which each of the one or more relay terminals sets up an RRC connection to the access network device, and sets a cause value and UAC, refer to the process in which the relay terminal sets up the RRC connection to the access network device in step 702. Details are not described again.

A radio resource control connection setup request message sent by the one or more relay terminals to the access network device includes a second cause value, and the second cause value indicates that the relay terminal provides a relay service for the remote terminal.

For example, when the first indication information carries a first cause value, the first cause value is used as the second cause value; when the first indication information carries a first cause value, and the first cause value is a cause value related to an emergency service, the first cause value is used as the second cause value; one cause value is determined from a plurality of candidate cause values as the second cause value; or the second cause value is a cause value that is defined in a protocol and that indicates that the relay terminal sets up the radio resource control connection to provide the relay service.

It should be noted that, for a process in which the relay terminal sets the cause value, refer to the setting process in step 702. Details are not described again.

803: The remote terminal receives an identifier of the one or more relay terminals from the one or more relay terminals, where the identifier of the one or more relay terminals is allocated by the access network device to the one or more relay terminals after the radio resource control connection to the access network device is set up.

For example, an identifier of each relay terminal may be a cell radio network temporary identifier (Cell-Radio Network Temporary Identifier, C-RNTI) allocated by the access network device to each relay terminal.

804: The remote terminal sends first request information to the access network device, where the first request information is for requesting the access network device to configure a relay-based indirect link for the remote terminal.

For example, after receiving the identifier of the one or more relay terminals, the remote terminal may report the identifier of the one or more relay terminals to the access network device, so that the access network device determines the one or more relay terminals paired with the remote terminal.

Optionally, the first request information includes the identifier of the one or more relay terminals.

For example, the first request information is information dedicated for requesting to configure the multi-link. When receiving the first request information, the access network device may determine that the multi-link needs to be configured for the remote terminal. Therefore, the remote terminal may include the identifier of the one or more relay terminals in the first request information, and report the identifier of the one or more relay terminals to the access network device. In this way, after receiving the first request information, the access network device may determine that the multi-link needs to be configured for the remote terminal, and then determine a target relay terminal from the one or more relay terminals based on the identifier of the one or more relay terminals, to configure the multi-link for the remote terminal.

For example, the first request information may alternatively reuse existing information. However, the remote terminal may request, by using the identifier of the one or more relay terminals, the access network device to configure the multi-link for the remote terminal. For example, some special terminal identifiers may be specified to request to configure the multi-link. Therefore, when determining to configure the multi-link by using the one or more relay terminals, the remote terminal may send the identifier (namely, the special identifier) of the one or more relay terminals to the access network device, to request the access network device to determine the target relay terminal from the one or more relay terminals based on the identifier of the one or more relay terminals, and configure the multi-link for the remote terminal. Optionally, when the existing information is reused, indication information may be further carried in the first request information. That is, the first request information further includes the indication information, and the remote terminal requests, by using the indication information, the access network device to configure the multi-link, and indicates, by using the identifier of the one or more relay terminals, the access network device to determine the target relay terminal from the one or more relay terminals, to configure the multi-link for the remote terminal. For example, an existing message like an RRC message may be reused, where the RRC message carries the identifier of the one or more relay terminals and the first indication information. In this way, after receiving the RRC message, the access network device may determine the target relay terminal from the one or more relay terminals to configure the multi-link for the remote terminal.

In an implementation of this application, when the first request information includes the identifier of the one or more relay terminals, but each relay terminal may return the identifier to the remote terminal at different time, the remote terminal cannot simultaneously obtain the identifier of the one or more relay terminals. In this case, the remote terminal may periodically report the first request information, and report a currently obtained identifier of a relay terminal each time timing time arrives. After the reporting is performed for a specific quantity of periodicities, the first request information is no longer reported; when a quantity of accumulated identifiers of relay terminals meets a requirement, the reporting of the first request information is also stopped; or after the first request information is reported for a preset quantity of times, the first request information is no longer reported.

In an implementation of this application, although the remote terminal triggers the one or more relay terminals to enter a connected state, not every relay terminal is completely suitable to serve as a relay terminal of the remote terminal. For example, after a specific relay terminal enters the connected state, a service requirement is newly added suddenly, and the relay terminal needs to use a large quantity of communication resources to perform transmission of a service of the relay terminal, and has no great capability to forward data of the remote terminal. Therefore, in this case, the relay terminal is no longer suitable to serve as a relay. Therefore, the remote terminal may select some relay terminals from the one or more relay terminals and report some relay terminals to the access network device. In this case, the first request information is no longer the identifier of the one or more relay terminals, but an identifier of some of the one or more relay terminals.

Optionally, the remote terminal may obtain information about each relay terminal over a communication link between the remote terminal and each relay terminal. Then, some suitable relay terminals are selected from the one or more relay terminals based on the performance information of each relay terminal, and are reported to the access network device. The information about each relay terminal includes one or more of load, a remaining battery level, Uu interface connection quality, and a radio resource control status of each relay terminal.

It should be noted that, in this application, an example in which the remote terminal reports the one or more relay terminals to the access network device is used for description.

It should be noted that, the identifier of the relay terminal is allocated by the access network device, that is, the access network device knows a specific relay terminal corresponding to each identifier. Therefore, after the remote terminal reports the identifier of each first relay terminal to the access network device, the access network device may successfully pair the remote terminal with at least one relay terminal.

Optionally, the first request information further includes a first cause value, and the first cause value indicates the one or more relay terminals to provide the relay service for the remote terminal; or the first cause value is used as a cause value used by the one or more relay terminals to set up the radio resource control connection to the access network device.

Optionally, the first request information further includes information about the one or more relay terminals. The information about the one or more relay terminals includes one or more of load, a remaining battery level, and user equipment interface connection quality of the one or more relay terminals.

805: The access network device determines the target relay terminal from the one or more relay terminals.

Correspondingly, the access network device determines, based on the identifier of the relay terminals that is sent by the remote terminal, the one or more relay terminals paired with the remote terminal.

For example, the access network device determines the target relay terminal from the one or more relay terminals based on the information about each relay terminal.

Optionally, in this embodiment, after setting up an RRC connection to each relay terminal, the access network device may directly obtain the information about each relay terminal from each relay terminal; or the remote terminal may obtain the information about each relay terminal over a communication link between the remote terminal and each relay terminal, and then report the information about each relay terminal to the access network device. For example, the first request information further includes the information about each relay terminal.

Optionally, the access network device may further query a core network for a pairing relationship between the remote terminal and the one or more relay terminals, to perform confirmation.

806: The access network device sends first configuration information to the remote terminal.

The first configuration information is used to configure an indirect link for the remote terminal over which relay is performed via the target relay terminal. Optionally, the first configuration information may alternatively include reconfiguration information of a direct link over which the remote terminal directly communicates with the access network device.

For example, the first configuration information includes a correspondence between a radio bearer, the direct link, and the indirect link, that is, indicates specific radio bearer data of a remote UE whose transmission is to be performed over the direct link and specific radio bearer data of the remote UE whose transmission is to be performed over the indirect link; and includes an end-to-end PDCP layer configuration parameter, an RLC bearer configuration between the remote UE on the direct link and a base station, and the like.

Further, the first configuration information may further include an identifier of the target relay terminal.

In addition, for more detailed descriptions of the first configuration information, refer to descriptions of the eleventh configuration information in step 603. The descriptions are similar, and details are not described again.

807: The access network device sends second configuration information to the target relay terminal.

The second configuration information is used to configure an indirect link for the remote terminal via the target relay terminal.

For example, the second configuration information includes a mapping relationship between a radio bearer of the remote UE and a user equipment relay radio bearer channel (Uu relay RLC channel) on a Uu interface, and a configuration parameter of the Uu relay RLC channel.

Further, the second configuration information may further include an identifier of the remote terminal.

In addition, for more detailed descriptions of the second configuration information, refer to descriptions of the twelfth configuration information in step 604. The descriptions are similar, and details are not described again.

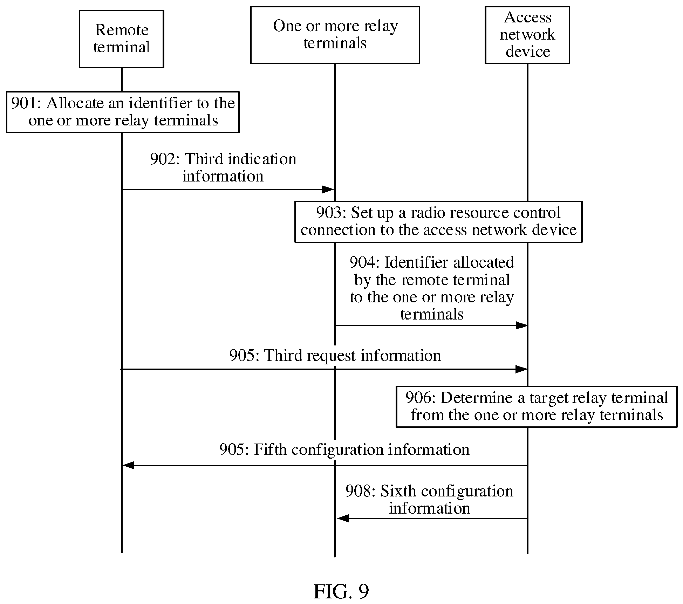

In FIG. 8, the remote terminal reports, to the access network device by reporting the C-RNTI of the relay terminal, the one or more relay terminals selected by the remote terminal; and the access network device determines the target relay terminal based on the relay terminals reported by the remote terminal, and configures the multi-link. During actual application, the identifier of the relay terminal may alternatively be configured by the remote terminal. The following describes, with reference to FIG. 9, a process in which the remote terminal configures the identifier for the relay terminal, to configure the multi-link.

FIG. 9 is a schematic flowchart of another link configuration method according to an embodiment of this application. Content that is in this embodiment and that is the same as content shown in FIG. 6 to FIG. 8 is not described again. The method includes but is not limited to content in the following steps.

901: A remote terminal allocates an identifier to one or more relay terminals.

Similarly, before allocating the identifier to the one or more relay terminals, the remote terminal also first selects the one or more relay terminals from a candidate terminal paired with the remote terminal. For a process of selecting the one or more relay terminals, refer to a process of selecting the one or more relay terminals by the remote terminal in step 601. Details are not described again.

Similarly, before allocating the identifier to the one or more relay terminals, the remote terminal needs to decide to request to configure a multi-link for the remote terminal. For a process in which the remote terminal decides to request to configure the multi-link, refer to step 601 in which the remote terminal decides to request to configure the multi-link for the remote terminal.

902: The remote terminal sends third indication information to the one or more relay terminals, where the third indication information indicates the one or more relay terminals to set up a radio resource control connection to an access network device, and the third indication information includes the identifier allocated by the remote terminal to the one or more relay terminals.

For example, the remote terminal first allocates one identifier to the one or more relay terminals, and then sends the identifier to the one or more relay terminals. For example, the remote terminal may include, in the third indication information, the identifier allocated to the one or more relay terminals. During actual application, the identifier of the one or more relay terminals may alternatively be sent to the one or more relay terminals by using another message. In this application, only an example in which the identifier is carried in second indication information is used for description.

Optionally, the identifier that may be allocated by the remote terminal to the relay terminal may be an index (index) value, that is, the remote terminal allocates one index value to each relay terminal as an identifier of the relay terminal.

Optionally, the remote terminal may alternatively allocate an identifier of the remote terminal to the relay terminal as the identifier of the relay terminal. For example, the remote terminal may allocate a C-RNTI of the remote terminal to the relay terminal, or the remote terminal generates an ID and allocates the ID to the relay terminal. It should be noted that, if the remote terminal allocates the C-RNTI of the remote terminal to the relay terminal, because the access network device knows the C-RNTI of the remote terminal, the remote terminal may not need to report the C-RNTI of the remote terminal to the access network device in step 804.

It should be noted that, when one relay UE may be a relay of a plurality of remote terminals, the plurality of remote terminals may allocate a same index value to the relay UE. In this case, depending only on the index value, the access network device cannot pair the relay UE with the remote UE (because the plurality of remote terminals send the same index value to the access network device). Therefore, for a case in which one relay UE may be a relay of the plurality of remote terminals, the remote UEs and the relay UE cannot be paired by simply allocating the index value. In this case, the remote terminals may allocate both identifiers of the remote terminals and the generated index value to the relay terminal. In this way, the identifiers allocated by the plurality of remote terminals are different, so that the remote UEs and the relay UE are successfully paired.

It should be noted that, when one remote UE is paired with a plurality of relay UEs, if an identifier allocated to the relay UEs is an identifier of the remote UE, the relay UEs have the same identifier. In this case, an identifier that is of a target relay terminal finally selected by the access network device is also the identifier, the access network device configures the identifier for the remote UE, and the remote UE cannot know which relay UE in the plurality of relay UEs paired with the remote UE is the target relay terminal. Therefore, for a case in which one remote UE is paired with the plurality of relay UEs, in this application, the remote terminal may allocate both an identifier of the remote terminal and the generated index value to the relay terminals. In this way, each relay terminal obtains a different identifier, so that the remote UE can identify which relay terminal is the target relay terminal selected by the access network device.

903: The one or more relay terminals set up the radio resource control connection to the access network device.

For a process in which each of the one or more relay terminals sets up an RRC connection to the access network device, and sets a cause value and UAC, refer to the process in which the relay terminal sets up the RRC connection to the access network device in step 702. Details are not described again.

904: The one or more relay terminals send, to the access network device, the identifier allocated by the remote terminal to the one or more relay terminals.

For example, in a process of setting up the RRC connection to the access network device, each relay terminal sends, to the access network device, the identifier allocated by the remote terminal to each relay terminal. Optionally, each relay terminal may include the identifier in an RRC setup complete message sent by the relay terminal to the access network device, to send the identifier to the access network device. When each relay terminal sends the identifier of each relay terminal to the access network device by using the RRC setup complete message, both step 902 and step 903 are a process in which the relay terminal sets up the RRC connection.

In addition, the relay terminal may alternatively send the identifier to the access network device by using another message. This is not limited in this application.

905: The remote terminal sends third request information to the access network device, where the third request information includes the identifier of the one or more relay terminals, and the third request information is for requesting the access network device to configure a relay-based indirect link for the remote terminal.

Optionally, a manner in which the remote terminal requests, by using the third request information, the access network device to configure the indirect link is similar to the foregoing manner in which the remote terminal requests, by using second request information, the access network device to configure the indirect link. Details are not described again.

First, it is noted that, because the identifier of the one or more relay terminals is allocated by the remote terminal, even if the one or more relay terminals send the identifier to the access network device, the access network device does not know who allocates the identifier. Therefore, to enable the access network device to pair the remote terminal with the one or more relay terminals, the remote terminal further needs to report the allocated identifier to the access network device. Because the identifier is allocated by the remote terminal, there is no sequence between step 904 and step 902, and step 904 and step 902 may be performed simultaneously.

For example, the remote terminal may synchronize the identifier of each relay terminal to the access network device by including the identifier of each relay terminal in the third request information.

906: The access network device determines the target relay terminal from the one or more relay terminals.

For example, each relay terminal sends, to the access network device, the identifier allocated by the remote terminal, and the remote terminal also sends, to the access network device, the identifier allocated by the remote terminal to the relay terminal. In this way, the access network device may perform association matching between the remote terminal and the relay terminal that send the same identifier, that is, associate the remote terminal with the one or more relay terminals, so that the access network device determines the target relay terminal for the remote terminal from the one or more relay terminals.

907: The access network device sends fifth configuration information to the remote terminal.

The fifth configuration information is used to configure the indirect link for the remote terminal over which the remote terminal communicates with the access network device via the target relay terminal. Optionally, the fifth configuration information may alternatively include reconfiguration information of a direct link over which the remote terminal directly communicates with the access network device.

For example, the fifth configuration information includes a correspondence between a radio bearer, a direct link, and an indirect link, that is, indicates specific radio bearer data of a remote UE whose transmission is to be performed over the direct link and specific radio bearer data of the remote UE whose transmission is to be performed over the indirect link; and includes an end-to-end PDCP layer configuration parameter, an RLC bearer configuration between the remote UE on the direct link and a base station, and the like.

Further, the fifth configuration information may further include an identifier of the target relay terminal.

In addition, for more detailed descriptions of the first configuration information, refer to descriptions of the eleventh configuration information in step 603. The descriptions are similar, and details are not described again.

For content of the eleventh configuration information, refer to content in step 603. Details are not described again.

908: The access network device sends sixth configuration information to the target relay terminal.

The sixth configuration information is used to configure an indirect link for the remote terminal via the target relay terminal.

For example, the second configuration information includes a mapping relationship between a radio bearer of the remote UE and a user equipment relay radio bearer channel (Uu relay RLC channel) on a Uu interface, and a configuration parameter of the Uu relay RLC channel.

Further, the sixth configuration information may further include an identifier of the remote terminal.

In addition, for more detailed descriptions of the sixth configuration information, refer to descriptions of the twelfth configuration information in step 604. The descriptions are similar, and details are not described again.

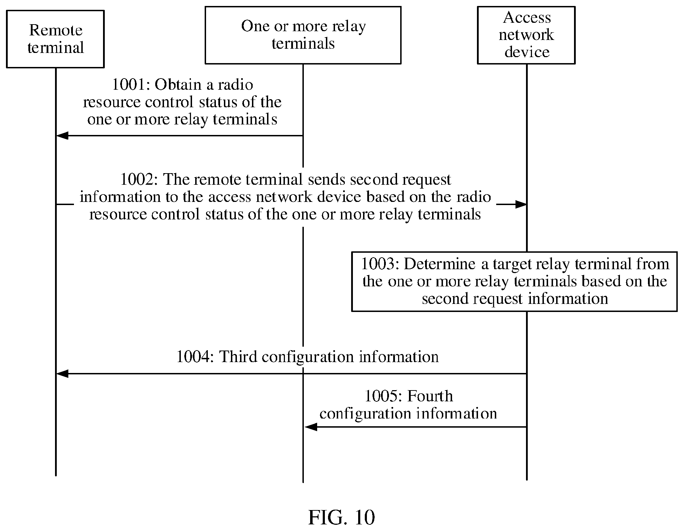

In link configuration processes shown in FIG. 7 to FIG. 9, the remote terminal requests, in a specific reporting manner, the access network device to configure the multi-link for the remote terminal. For example, the remote terminal requests to configure the multi-link based on the C-RNTI of the relay terminal; or requests to configure the multi-link in a manner of allocating the index value. In other words, a type of the request information sent by the remote terminal to the access network device is fixed, and adaptive request information content is not selected based on the RRC status of the relay terminal, to request the access network device to configure the multi-link. The following describes, with reference to FIG. 10, a process in which the remote terminal configures the multi-link based on the RRC status of the relay terminal.

FIG. 10 is a schematic flowchart of another link configuration method according to an embodiment of this application. Content that is in this embodiment and that is the same as content shown in FIG. 6 to FIG. 9 is not described again. The method includes but is not limited to content in the following steps.

1001: A remote terminal obtains a radio resource control status of one or more relay terminals.

Similarly, before allocating an identifier to the one or more relay terminals, the remote terminal also first selects the one or more relay terminals from a candidate terminal paired with the remote terminal. For a process of selecting the one or more relay terminals, refer to a process of selecting the one or more relay terminals by the remote terminal in step 601. Details are not described again.

Similarly, before allocating the identifier to the one or more relay terminals, the remote terminal needs to decide to request to configure a multi-link for the remote terminal. For a process in which the remote terminal decides to request to configure the multi-link, refer to step 601 in which the remote terminal decides to request to configure the multi-link for the remote terminal.

For example, the remote terminal obtains an RRC status of each relay terminal over a communication link between the remote terminal and the relay terminal.

Alternatively, the remote terminal obtains, from the one or more relay terminals, the identifier that is of the relay terminals and that is allocated by an access network device, and determines an RRC status of the relay terminals depending on whether the identifier of the relay terminals can be obtained.

1002: The remote terminal sends second request information to the access network device based on the radio resource control status of the one or more relay terminals, where the second request information is for requesting the access network device to configure a relay-based indirect link for the remote terminal.

Optionally, if the RRC status of the one or more relay terminals is a connected state, first request information includes an identifier (for example, a C-RNTI) of the relay terminals; or first request information includes an identifier (namely, a C-RNTI) of each relay terminal and first indication information. In other words, the remote terminal determines, by obtaining the RRC status of the relay terminals, content carried in the first request information. When the RRC status of the relay terminals is the connected state, the C-RNTI of the relay terminals may be carried in the first request information, to request the access network device to configure the multi-link for the remote terminal. In addition, the access network device may obtain the C-RNTI of the relay terminals, determine the one or more relay terminals paired with the remote terminal, and may determine that the one or more relay terminals are in the connected state. In this case, the access network device may directly configure the multi-link for the remote terminal.

Optionally, if an RRC status of any one of the one or more relay terminals is an idle state or an inactive state, the first request information includes the first indication information.

In addition, if there is a relay terminal whose RRC status is the idle state or the inactive state in the one or more relay terminals, the remote terminal may autonomously decide the content in the first request information. For example, if the remote terminal ignores the relay terminal in the idle state or the inactive state, the first request information includes an identifier of a relay terminal in the connected state, that is, only the identifier of the relay terminal in the connected state is carried in the second request information; or the remote terminal decides that the first request information includes the first indication information.

1003: The access network device determines a target relay terminal from the one or more relay terminals based on the second request information.

It should be noted that, when the second request information includes the identifier of the one or more relay terminals, the access network device first determines the one or more relay terminals based on the identifier of the one or more relay terminals, and then determines a target relay terminal from the one or more relay terminals. For details, refer to a process in which the access network device determines the one or more relay terminals in step 805. Details are not described again.

When the second request information includes indication information for requesting to configure the relay-based indirect link for the remote terminal, that is, does not include the identifier, the one or more relay terminals are obtained from a core network in response to the second request information; and the target relay terminal is then determined from the one or more relay terminals. For details, refer to a process in which the access network device determines the one or more relay terminals in step 704. Details are not described again.

1004: The access network device sends third configuration information to the remote terminal, where the third configuration information is used to configure an indirect link for the remote terminal over which relay is performed via the target relay terminal.

For the third configuration information, refer to content in the foregoing first configuration information. Details are not described again.

1005: The access network device sends fourth configuration information to the target relay terminal, where the fourth configuration information is used to configure an indirect link.

The fourth configuration information is similar to the foregoing second configuration information. Details are not described again.

It should be noted that, if the target relay terminal is in IDLE or INACTIVE when the remote terminal receives the third configuration information, the remote terminal may send indication information to the target relay terminal, to trigger the target relay terminal to enter the connected state. A manner in which the remote terminal triggers the target relay terminal to enter the connected state is similar to the foregoing manner in which the remote terminal triggers the one or more relay terminals to enter the connected state. Details are not described again.

It should be noted that, if the target relay terminal is already in the connected state, the remote terminal does not send the indication information to the target relay terminal.

Optionally, the indication information for triggering the target relay terminal to enter the connected state includes an identifier of the remote terminal.

It should be explained that, there is a case in which one relay terminal serves the remote terminal. Therefore, the access network device may alternatively allocate the target relay terminal to another remote terminal as a relay of the another remote terminal. If the target relay terminal only notifies the access network device that the target relay terminal needs to perform a relay service, the access network device cannot configure a link parameter for the target relay terminal. Therefore, the remote terminal may further send the identifier of the remote terminal to the target relay terminal by using the indication. In this way, the target relay terminal reports the identifier to a base station, and the base station can determine the remote terminal served by the target relay terminal.

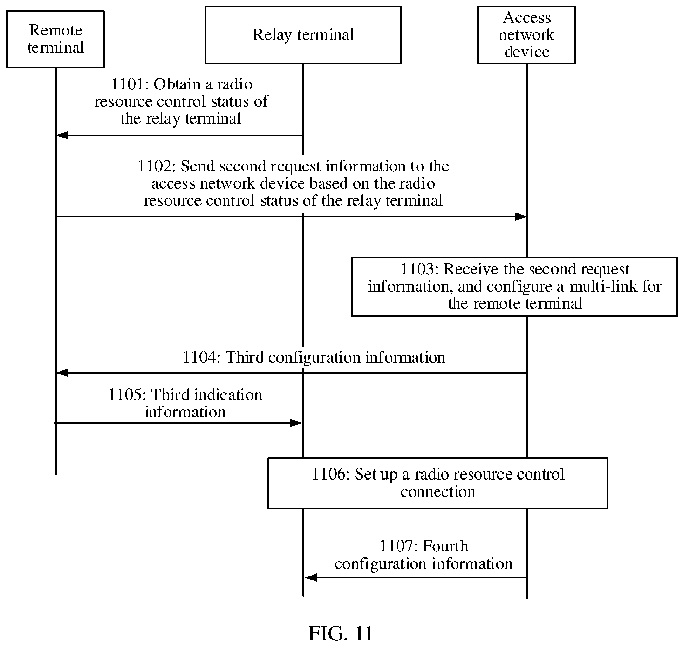

The following describes, with reference to FIG. 11, a case in which the multi-link is configured for the remote terminal when a remote UE is paired with only one relay UE.

FIG. 11 is a schematic flowchart of another link configuration method according to an embodiment of this application. The link configuration method includes but is not limited to the following steps.

1101: A remote terminal obtains a radio resource control status of a relay terminal.

For example, the remote terminal obtains an RRC status of each relay terminal over a communication link between the remote terminal and the relay terminal.

Alternatively, the remote terminal obtains, from the relay terminal, an identifier that is of the relay terminals and that is allocated by an access network device, and determines an RRC status of the relay terminals depending on whether the identifier of the relay terminals can be obtained.

1102: The remote terminal sends second request information to the access network device based on the radio resource control status of the relay terminal, where the second request information is for requesting the access network device to configure a multi-link for the remote terminal.

Optionally, if the RRC status of the relay terminal is a connected state, the second request information includes an identifier (for example, a C-RNTI) of the relay terminal; or the second request information includes the identifier (namely, the C-RNTI) of the relay terminal and indication information. In other words, the remote terminal determines content in a second request message based on the RRC status of the relay terminal. When the RRC status of the relay terminal is the connected state, the C-RNTI of the relay terminal may be carried in the second request information, to request the access network device to configure the multi-link for the remote terminal. In addition, the access network device may obtain the C-RNTI of the relay terminal, determine the relay terminal paired with the remote terminal, and may determine that the relay terminal is in the connected state. In this case, the access network device may directly configure the multi-link for the remote terminal.

Optionally, if the relay terminal is in an idle state or an inactive state, the second request information includes second indication information. The second indication information may be a default value or 1-bit indication information, and specially indicates a base station to configure an indirect link for the remote terminal.

1103: The access network device receives the second request information, and configures the multi-link for the remote terminal.

It should be noted that, if the second request information includes the identifier of the relay terminal, for the access network device, reference may be made to a process in which the access network device configures the multi-link for the remote terminal in step 805, and details are not described again; or if the second request information includes indication information for requesting the access network device to configure the multi-link, for the access network device, reference may be made to a process in which the access network device configures the multi-link for the remote terminal in step 704.

1104: The access network device sends third configuration information to the remote terminal, where the third configuration information includes an identifier of a target relay terminal.

For the third configuration information, refer to the foregoing first configuration information. Details are not described again.

1105: The remote terminal sends third indication information to the target relay terminal, where the third indication information indicates the target relay terminal to set up a radio resource control connection to the access network device.

It should be noted that, if the target relay terminal is already in the connected state, that is, when the first request information sent by the remote terminal includes the identifier of the relay terminal, the remote terminal does not send the third indication information to the target relay terminal, that is, does not perform content in step 1105.

The third indication information may further include an identifier of the remote terminal.

1106: The target relay terminal sets up the radio resource control connection to the access network device.

Similarly, the target relay terminal also sets up an RRC connection to the access network device. If the relay terminal receives the identifier of the remote terminal in 1005, the relay terminal sends, to the access network device, the identifier that is of the remote terminal and that is sent by the remote terminal to the relay terminal. For example, the target relay terminal sends the identifier of the remote terminal to the access network device by using an RRC setup complete message. Solutions about a cause value are the same as those described above.

1107: The access network device sends fourth configuration information to the target relay terminal.

For the fourth configuration information, refer to the foregoing second configuration information. Details are not described again.

Similarly, after receiving the identifier of the remote terminal that is sent by the target relay terminal, the access network device may determine a specific remote terminal whose relay is the target relay terminal, so that the access network device may configure a corresponding link parameter for the target relay terminal, and deliver the corresponding fourth configuration information.

In the foregoing embodiments, the remote UE first triggers the relay UE paired with the remote UE to enter the connected state, and does not pay attention to which relay terminal is the target relay terminal selected by the access network device. The following describes a process in which the access network device first configures the target relay terminal for a remote UE, and the remote UE then triggers the specific target relay terminal to enter a connection.

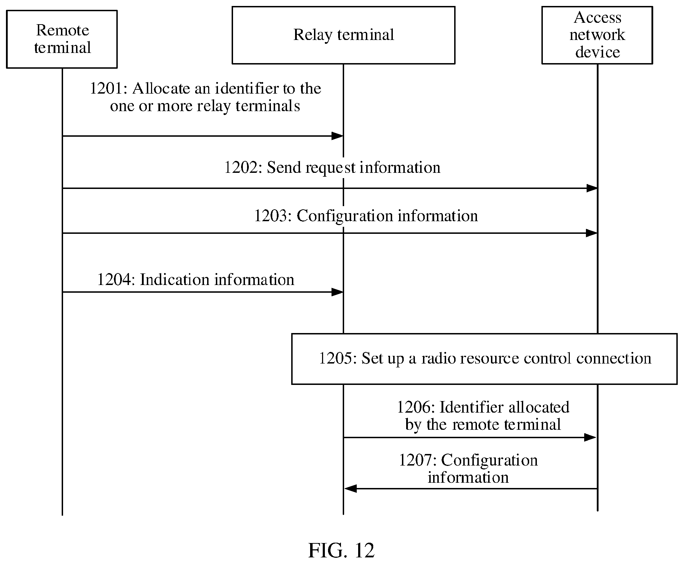

FIG. 12 is a schematic flowchart of another link configuration method according to an embodiment of this application. The method includes but is not limited to content in the following steps.

1201: A remote terminal allocates an identifier to one or more relay terminals.

A manner in which the remote terminal selects the one or more relay terminals is similar to the foregoing manner in which the one or more relay terminals are selected, and details are not described again. A manner in which the remote terminal allocates an identifier to each third relay terminal is similar to the foregoing manner in which the remote terminal allocates the identifier to each relay terminal, and details are not described again.

1202: The remote terminal sends request information to an access network device, where the request information is for requesting the access network device to configure a relay-based multi-link for the remote terminal, and third request information includes the identifier of the one or more relay terminals.

1203: The access network device sends configuration information to the remote terminal.
the configuration information is used to configure, for the remote terminal, an indirect link and a direct link over which the remote terminal communicates with the access network device via a target relay terminal, the configuration information includes an identifier of the target relay terminal, and the target relay terminal is determined by the access network device from the one or more relay terminals based on the identifier of the one or more relay terminals.

A manner in which the access network device selects the target relay terminal from the one or more relay terminals is similar to a manner in which the access network device selects the target relay terminal from the one or more relay terminals in step 805. Details are not described again.

1204: The remote terminal sends indication information to the target relay terminal, where the third indication information indicates the target relay terminal to set up a radio resource control connection to the access network device.

For example, the remote terminal may determine, based on the identifier of the target relay terminal in the configuration information in step 1203, which relay terminal is selected by the access network device as the target relay terminal, and then send the indication information to the target relay terminal.

1205: The target relay terminal sets up the radio resource control connection to the access network device.

For example, a manner in which the target relay terminal sets up the radio resource control connection to the access network device is similar to a manner in which the terminal sets up the RRC connection to the access network device in step 702, and details are not described again.

1206: The target relay terminal sends, to the access network device, the identifier allocated by the remote terminal.

For example, the target relay terminal sends the identifier of the target relay terminal to the access network device, so that the access network device can know a specific remote terminal for which the target relay terminal performs relay. A manner in which the target relay terminal sends, to the access network device, the identifier allocated by the remote terminal is similar to a manner in which the relay terminal sends the identifier to the access network device in step 904.

Optionally, the target relay terminal may send, to the access network device by using an RRC setup complete message, the identifier allocated by the remote terminal. In this case, both step 1305 and step 1306 are a process in which the target relay terminal sets up the RRC connection to the access network device.

1207: The access network device sends configuration information to the target relay terminal.

The configuration information is used to configure the indirect link for the remote terminal over which the remote terminal communicates with the access network device via the target relay terminal.

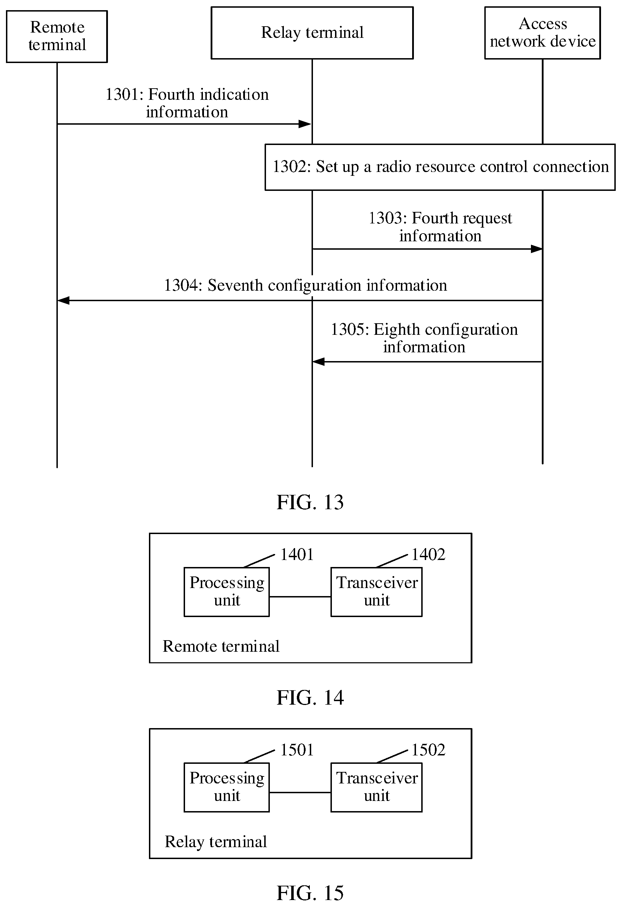

In the foregoing embodiments, the remote UE requests the access network device to configure the multi-link. During actual application, the relay UE may alternatively request the access network device to configure the multi-link for the remote UE. The following describes, with reference to FIG. 13 and by using an example in which there is one relay terminal paired with the remote terminal, a process in which the relay UE requests the access network device to configure the multi-link for the remote UE.

FIG. 13 is a schematic flowchart of another link configuration method according to an embodiment of this application. The method includes but is not limited to content in the following steps.

1301: A remote terminal sends fourth indication information to one or more relay terminals, where the fourth indication information indicates the relay terminals to set up a radio resource control connection to an access network device, and indicates the relay terminals to request the access network device to configure a relay-based indirect link for the remote terminal.

Similarly, before allocating an identifier to the one or more relay terminals, the remote terminal also first selects the one or more relay terminals from a candidate terminal paired with the remote terminal. For a process of selecting the one or more relay terminals, refer to a process of selecting the one or more relay terminals by the remote terminal in step 601. Details are not described again.

Similarly, before allocating the identifier to the one or more relay terminals, the remote terminal needs to decide to request to configure a multi-link for the remote terminal. For a process in which the remote terminal decides to request to configure the multi-link, refer to step 601 in which the remote terminal decides to request to configure the multi-link for the remote terminal.

Optionally, the remote terminal may further send an identifier of the remote terminal to the access network device. The identifier of the remote terminal includes a cell radio network temporary identifier of the remote terminal and/or the identifier allocated by the remote terminal to the remote.

It should be noted that when a remote UE and a relay UE are paired in a one-to-one manner, the identifier of the remote terminal may not need to be sent to the access network device.

1302: The one or more relay terminals set up the radio resource control connection to the access network device.

For a process in which each of the one or more relay terminals sets up an RRC connection to the access network device, and sets a cause value and UAC, refer to the process in which the relay terminal sets up the RRC connection to the access network device in step 702. Details are not described again.

1303: The one or more relay terminals send fourth request information to the access network device, where the fourth request information is for requesting the access network device to configure a relay-based indirect link for the remote terminal.

A manner in which the one or more relay terminals send the fourth request information to the access network device to request the access network device to configure the relay-based indirect link for the remote terminal is similar to a manner in which the remote terminal sends first request information to the access network device to request the access network device to configure the relay-based indirect link for the remote terminal in step 804. Details are not described again.

Optionally, the fourth request information further includes the identifier of the remote terminal. Similarly, if the remote UE and the relay UE are paired in a one-to-one manner, the identifier of the remote terminal does not need to be carried, and the multi-link may be directly requested to be configured for the remote terminal.

1304: The access network device sends seventh configuration information to the remote terminal, where the seventh configuration information is used to configure an indirect link for the remote terminal over which relay is performed via a target relay terminal.

The seventh configuration information is used to configure the indirect link for the remote terminal over which the remote terminal communicates with the access network device via the target relay terminal. Optionally, the seventh configuration information may alternatively include reconfiguration information of a direct link over which the remote terminal directly communicates with the access network device.

For example, the seventh configuration information includes a correspondence between a radio bearer, a direct link, and an indirect link, that is, indicates specific radio bearer data of a remote UE whose transmission is to be performed over the direct link and specific radio bearer data of the remote UE whose transmission is to be performed over the indirect link; and includes an end-to-end PDCP layer configuration parameter, an RLC bearer configuration between the remote UE on the direct link and a base station, and the like.

Further, the seventh configuration information may further include an identifier of the target relay terminal.

In addition, for more detailed descriptions of the seventh configuration information, refer to descriptions of the eleventh configuration information in step 603. The descriptions are similar, and details are not described again.

1305: The access network device sends eighth configuration information to the target relay terminal, where the eighth configuration information is used to configure the indirect link for the remote terminal via the target relay terminal.

For example, the eighth configuration information includes a mapping relationship between a radio bearer of the remote UE and a user equipment relay radio bearer channel (Uu relay RLC channel) on a Uu interface, and a configuration parameter of the Uu relay RLC channel.

Further, the eighth configuration information may further include an identifier of the remote terminal.

In addition, for more detailed descriptions of the eighth configuration information, refer to descriptions of the twelfth configuration information in step 604. The descriptions are similar, and details are not described again.

In an implementation of this application, that the remote UE triggers the relay terminal to enter a connected state in this application may be implemented by the access network device. Optionally, the access network device determines the relay terminal paired with the remote terminal. For example, the access network device obtains, from a core network, the relay terminal paired with the remote terminal, or the access network device may trigger the relay terminal to enter the connected state. For example, the access network device may page the paired relay terminal, so that the relay UE enters the connected state, and a multi-path is then configured. In another implementation of this application, when the relay UE is in an RRC idle/inactive state, the remote UE may obtain an S-TMSI/I-RNTI of the relay UE, and report the S-TMSI/I-RNTI to the base station. The base station triggers paging based on the S-TMSI/I-RNTI identifier of the relay UE. If the I-RNTI of the relay UE is received, the base station triggers RAN paging. If the S-TMSI of the relay UE is received, the base station reports the S-TMSI to a core network, and triggers the core network to perform CN paging, so that the relay UE enters the connected state.

FIG. 14 is a diagram of a remote terminal according to an embodiment of this application. The remote terminal includes a processing unit 1401 and a transceiver unit 1402.

In an implementation of this application, the processing unit 1401 is configured to: control the transceiver unit 1402 to send first indication information to one or more relay terminals, where the first indication information indicates the one or more relay terminals to set up a radio resource control connection to an access network device;
receive an identifier of the one or more relay terminals from the one or more relay terminals, where the identifier of the one or more relay terminals is allocated by the access network device to the one or more relay terminals after the radio resource control connection to the access network device is set up;
send first request information to the access network device, where the first request information includes the identifier of the one or more relay terminals, and the first request information is for requesting the access network device to configure a relay-based indirect link for the remote terminal; and
receive first configuration information from the access network device, where the first configuration information is used to configure an indirect link for the remote terminal over which relay is performed via the target relay terminal, and the target relay terminal is determined by the access network device from the one or more relay terminals.

In another implementation of this application, the processing unit 1401 is configured to: control the transceiver unit 1402 to obtain a radio resource control connection status of one or more relay terminals.
send second request information to an access network device based on the radio resource control connection status of the one or more relay terminals, where the second request information is for requesting the access network device to configure a relay-based indirect link for the remote terminal; and
receive third configuration information from the access network device, where the third configuration information is used to configure an indirect link for the remote terminal over which relay is performed via a target relay terminal, and the target relay terminal is determined by the access network device from the one or more relay terminals.

For more detailed functions of the processing unit 1401 and the transceiver unit 1402, refer to the foregoing method embodiments. Details are not described again.

FIG. 15 is a diagram of a relay terminal according to an embodiment of this application. The relay terminal includes a processing unit 1501 and a transceiver unit 1502.

The processing unit 1501 is configured to: control the transceiver unit to receive first indication information from a remote terminal, where the first indication information indicates the relay terminal to set up a radio resource control connection to an access network device;
send an identifier of the relay terminal to the remote terminal, where the identifier of the relay terminal is allocated by the access network device to the relay terminal after the radio resource control connection to the access network device is set up; and
receive second configuration information from the access network device, where the second configuration information is used to configure an indirect link for the remote terminal over which relay is performed via the relay terminal.

For more detailed functions of the processing unit 1501 and the transceiver unit 1502, refer to the foregoing method embodiments. Details are not described again.

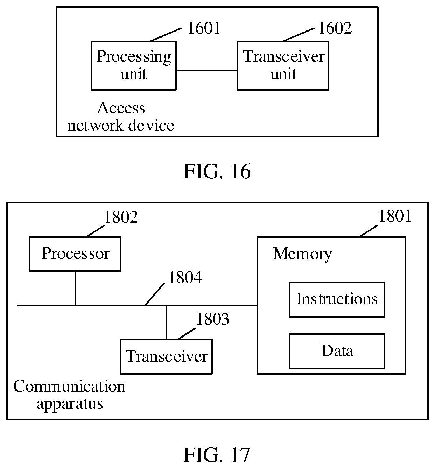

FIG. 16 is a diagram of an access network device according to an embodiment of this application. The access network device includes a processing unit 1601 and a transceiver unit 1602.

In an implementation of this application,
the transceiver unit 1602 is configured to receive first request information from a remote terminal, where the first request information includes an identifier of one or more relay terminals, and the identifier of the one or more relay terminals is allocated by the access network device to the one or more relay terminals after a radio resource control connection to the access network device is set up.

The processing unit 1601 is configured to: determine a target relay terminal from the one or more relay terminals; and
send first configuration information to the remote terminal, where the first configuration information is used to configure an indirect link for the remote terminal over which relay is performed via the target relay terminal.

The transceiver unit 1602 is configured to send second configuration information to the target relay terminal, where the second configuration information is used to configure the indirect link.

In an implementation of this application,
the transceiver unit 1602 is configured to receive second request information from a remote terminal, where the second request information is for requesting the access network device to configure a relay-based indirect link for the remote terminal.

The processing unit 1601 is configured to determine a target relay terminal based on the second request information.

The transceiver unit 1602 is configured to: send third configuration information to the remote terminal, where the third configuration information is used to configure an indirect link for the remote terminal over which relay is performed via the target relay terminal; and send fourth configuration information to the target relay terminal, where the fourth configuration information is used to configure the target relay terminal to provide a relay service on the indirect link.

FIG. 17 is a diagram of a communication apparatus according to an embodiment of this application.

As shown in FIG. 17, the communication apparatus includes a memory 1801, a processor 1802, a communication interface 1803, and a bus 1804. The memory 1801, the processor 1802, and the communication interface 1803 are communicatively connected to each other through the bus 1804. The communication apparatus may be the foregoing server. The processor 1802 may be a processor in the foregoing server, and the memory 1801 may be a hard disk in the foregoing server.

The memory 1801 may be a read-only memory (Read Only Memory, ROM), a static storage device, a dynamic storage device, or a random access memory (Random Access Memory, RAM). The memory 1801 may store a program. When the program stored in the memory 1801 is executed by the processor 1802, the processor 1802 and the communication interface 1803 are configured to perform steps in the firmware upgrade methods in embodiments of this application.

The processor 1802 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, is configured to execute a related program, and cooperates with the memory 1801, to implement the firmware upgrade methods in the method embodiments of this application.

The processor 1802 may alternatively be an integrated circuit chip, and has a signal processing capability. During implementation, the firmware upgrade methods in this application may be completed by using a hardware integrated logic circuit in the processor 1802 or instructions in a form of software. The processor 1802 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1801. The processor 1802 reads information in the memory 1801, and cooperates with the memory 1801, to perform the steps in the firmware upgrade methods.

The communication interface 1803 may be a transceiver apparatus like a transceiver, to implement communication between the communication apparatus and another device or a communication network. The communication interface 1803 may alternatively be an input-output interface, to implement data transmission between the communication apparatus and the input-output device. The input-output device includes but is not limited to a keyboard, a mouse, a display, a USB flash drive, and a hard disk. The bus 1804 may include a path for transmitting information between various components (for example, the memory 1801, the processor 1802, and the communication interface 1803) of the communication apparatus.

It should be noted that, although only the memory, the processor, and the communication interface are shown in the communication apparatus shown in FIG. 17, during specific implementation, persons skilled in the art should understand that the communication apparatus further includes another device necessary for normal running. In addition, based on a specific requirement, persons skilled in the art should understand that the communication apparatus may further include hardware devices for implementing other additional functions. In addition, persons skilled in the art should understand that the communication apparatus may include only devices necessary for implementing embodiments of this application, but not necessarily include all the devices shown in FIG. 17.

An embodiment of this application further provides a computer-readable storage medium, and the computer-readable storage medium stores a computer program. When the program is executed by a processor, a procedure related to a terminal device in a communication method provided in the foregoing method embodiments may be implemented.

An embodiment of this application further provides a computer-readable storage medium. The computer-readable storage medium stores a computer program. When the program is executed by a processor, a procedure related to the network device in a communication method provided in the foregoing method embodiments may be implemented.

An embodiment of this application further provides a computer program product. When the computer program product is run on a computer or a processor, the computer or the processor is enabled to perform one or more steps in any one of the foregoing communication methods. If each component module in the foregoing device is implemented in a form of a software functional unit and is sold or used as an independent product, the component module may be stored in the computer-readable storage medium.

It should be understood that, the processor mentioned in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or transistor logic device, or a discrete hardware component, the memory (a storage module) is integrated into the processor.

It should be noted that the memory described in this specification is intended to include but is not limited to these memories and any memory of another appropriate type.

It should be further understood that first, second, third, fourth, and various numbers in this specification are merely used for differentiation for ease of description, and are not intended to limit the scope of this application.

It should be understood that the term "and/or" in this specification describes only an association relationship for describing associated objects and indicates that three relationships may exist. For example, A and/or B may represent the following three cases: Only A exists, both A and B exist, and only B exists. In addition, the character "/" in this specification usually indicates an "or" relationship between the associated objects.

It should be understood that in embodiments of this application, sequence numbers of the foregoing processes do not mean an execution sequence. An execution sequence of the processes should be determined based on functions and internal logic of the processes, and should not constitute any limitation on the implementation processes of embodiments of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in the form of the software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps in the method in embodiments of this application may be adjusted, combined, or deleted based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments, or make equivalent replacements to some technical features thereof, without departing from the scope of the technical solutions of embodiments of this application.

## Claims

1. A link configuration method, applied to a remote terminal, wherein the method comprises:
sending first indication information to one or more relay terminals, wherein the first indication information indicates the one or more relay terminals to set up a radio resource control connection to an access network device;
receiving an identifier of the one or more relay terminals from the one or more relay terminals, wherein the identifier of the one or more relay terminals is allocated by the access network device to the one or more relay terminals after the radio resource control connection to the access network device is set up;
sending first request information to the access network device, wherein the first request information comprises the identifier of the one or more relay terminals, and the first request information is for requesting the access network device to configure a relay-based indirect link for the remote terminal; and
receiving first configuration information from the access network device, wherein the first configuration information is used to configure an indirect link for the remote terminal over which relay is performed via the target relay terminal, and the target relay terminal is determined by the access network device from the one or more relay terminals.

2. The method according to claim 1, wherein
the identifier of the one or more relay terminals is a cell radio network temporary identifier of the one or more relay terminals.

3. The method according to claim 1 or 2, wherein
the first indication information comprises a first cause value, and the first cause value indicates the one or more relay terminals to provide a relay service for the remote terminal; or
the first cause value is used as a cause value used by the one or more relay terminals to set up the radio resource control connection to the access network device.

4. The method according to any one of claims 1 to 3, wherein
the first request information further comprises information about the one or more relay terminals; and
the information about the one or more relay terminals comprises one or more of load, a remaining battery level, and user equipment interface connection quality of the one or more relay terminals.

5. The method according to any one of claims 1 to 4, wherein the method further comprises:
obtaining a radio resource control connection status of a candidate relay terminal paired with the remote terminal and/or information about the candidate relay terminal, wherein the information about the candidate relay terminal comprises one or more of load, a remaining battery level, and user equipment interface connection quality of the candidate relay terminal; and
determining the one or more relay terminals from the candidate relay terminal based on the radio resource control connection status of the candidate relay terminal and/or the information about the candidate relay terminal.

6. The method according to any one of claims 1 to 5, wherein the method further comprises:
deciding, based on a relationship between a communication status of the remote terminal and a threshold, to request the access network device to configure the indirect link for the remote terminal, wherein the threshold is determined by the remote terminal or the access network device.

7. The method according to claim 6, wherein
the communication status comprises one or more of the following:
an uplink rate, uplink bandwidth, a packet loss rate, and signal quality of a direct link.

8. A link configuration method, applied to a relay terminal, wherein the method comprises:
receiving first indication information from a remote terminal, wherein the first indication information indicates the relay terminal to set up a radio resource control connection to the access network device;
sending an identifier of the relay terminal to the remote terminal, wherein the identifier of the relay terminal is allocated by the access network device to the relay terminal after the radio resource control connection to the access network device is set up; and
receiving second configuration information from the access network device, wherein the second configuration information is used to configure an indirect link for the remote terminal over which relay is performed via the relay terminal.

9. The method according to claim 8, wherein
the identifier of the relay terminal is a cell radio network temporary identifier of the relay terminal.

10. The method according to claim 8 or 9, wherein
a radio resource control connection setup request message sent by the relay terminal to the access network device comprises a second cause value, and the second cause value indicates a requirement of the relay terminal for setting up the radio resource control connection.

11. The method according to claim 10, wherein the method further comprises:
when the first indication information carries a first cause value, using the first cause value as the second cause value;
when the first indication information carries the first cause value, and the first cause value is a cause value related to a high priority service, using the first cause value as the second cause value;
determining one cause value from a plurality of candidate cause values as the second cause value; or
the second cause value is a cause value that is defined in a protocol and that indicates that the relay terminal sets up the radio resource control connection to provide a relay service.

12. A link configuration method, applied to an access network device, wherein the method comprises:
receiving first request information from a remote terminal, wherein the first request information comprises an identifier of the one or more relay terminals, and the identifier of the one or more relay terminals is allocated by the access network device to the one or more relay terminals after a radio resource control connection to the access network device is set up;
determining a target relay terminal from the one or more relay terminals;
sending first configuration information to the remote terminal, wherein the first configuration information is used to configure an indirect link for the remote terminal over which relay is performed via the target relay terminal; and
sending second configuration information to the target relay terminal, wherein the second configuration information is used to configure the indirect link.

13. The method according to claim 12, wherein
the determining a target relay terminal from the one or more relay terminals comprises:
determining the target relay terminal based on information about the one or more relay terminals, wherein
the information about the one or more relay terminals comprises one or more of load, a remaining battery level, and user equipment interface connection quality of the one or more relay terminals.

14. A link configuration method, applied to a remote terminal, wherein the method comprises:
obtaining a radio resource control connection status of one or more relay terminals;
sending second request information to an access network device based on the radio resource control connection status of the one or more relay terminals, wherein the second request information is for requesting the access network device to configure a relay-based indirect link for the remote terminal; and
receiving third configuration information from the access network device, wherein the third configuration information is used to configure an indirect link for the remote terminal over which relay is performed via a target relay terminal, and the target relay terminal is determined by the access network device from the one or more relay terminals.

15. The method according to claim 14, wherein
when the radio resource control connection status of the one or more relay terminals is a connected state, the first request information comprises an identifier of the one or more relay terminals; or
when the radio resource control connection status of the one or more relay terminals is an idle state or an inactive state, the first request information comprises first indication information for requesting to configure the indirect link for the remote terminal.

16. The method according to claim 14 or 15, wherein the method further comprises:
sending second indication information to the target relay terminal, wherein the second indication information indicates the target relay terminal to set up a radio resource control connection to the access network device.

17. The method according to claim 16, wherein
the second indication information comprises a third cause value, wherein the third cause value indicates the target relay terminal to provide a relay service for the remote terminal, or is used as a cause value used by the target relay terminal to set up the radio resource control connection to the access network device.

18. The method according to any one of claims 14 to 17, wherein
the second request information further comprises information about the one or more relay terminals, wherein
the information about the one or more relay terminals comprises one or more of load, a remaining battery level, and user equipment interface connection quality of the one or more relay terminals.

19. The method according to any one of claims 14 to 18, wherein the method further comprises:
obtaining a radio resource control connection status of a candidate relay terminal paired with the remote terminal and/or information about the candidate relay terminal, wherein the information about the candidate relay terminal comprises one or more of load, a remaining battery level, and user equipment interface connection quality of the candidate relay terminal; and
determining the one or more relay terminals from the candidate relay terminal based on the radio resource control connection status of the candidate relay terminal and/or the information about the candidate relay terminal.

20. The method according to any one of claims 14 to 19, wherein the method further comprises:
deciding, based on a relationship between a communication status of the remote terminal and a threshold, to request the access network device to configure the indirect link for the remote terminal, wherein the threshold is determined by the remote terminal or the access network device.

21. The method according to claim 20, wherein
the communication status comprises one or more of the following:
an uplink rate, uplink bandwidth, a packet loss rate, and signal quality of a direct link.

22. A link configuration method, applied to an access network device, wherein the method comprises:
receiving second request information from a remote terminal, wherein the second request information is for requesting the access network device to configure a relay-based indirect link for the remote terminal;
determining a target relay terminal based on the second request information;
sending third configuration information to the remote terminal, wherein the third configuration information is used to configure an indirect link for the remote terminal over which relay is performed via the target relay terminal; and
sending fourth configuration information to the target relay terminal, wherein the fourth configuration information is used to configure the target relay terminal to provide a relay service on the indirect link.

23. The method according to claim 22, wherein
when the second request information comprises an identifier of the one or more relay terminals, the determining, by the access network device, a target relay terminal from the one or more relay terminals comprises:
determining the target relay terminal from the one or more relay terminals based on the identifier of the one or more relay terminals.

24. The method according to claim 22, wherein
when the second request information comprises indication information for requesting to configure the relay-based indirect link for the remote terminal, the determining a target relay terminal based on the second request information comprises:
obtaining the one or more relay terminals from a core network in response to the second request information; and
determining the target relay terminal from the one or more relay terminals.

25. The method according to any one of claims 22 to 24, wherein determining the target relay terminal from the one or more relay terminals comprises:
determining the target relay terminal based on information about the one or more relay terminals, wherein
the information about the one or more relay terminals comprises one or more of load, a remaining battery level, and user equipment interface connection quality of the one or more relay terminals.

26. A communication apparatus, wherein the apparatus comprises:
a transceiver unit, configured to send first indication information to one or more relay terminals, wherein the first indication information indicates the one or more relay terminals to set up a radio resource control connection to an access network device, wherein
the transceiver unit is further configured to receive an identifier of the one or more relay terminals from the one or more relay terminals, wherein the identifier of the one or more relay terminals is allocated by the access network device to the one or more relay terminals after the radio resource control connection to the access network device is set up;
the transceiver unit is further configured to send first request information to the access network device, wherein the first request information comprises the identifier of the one or more relay terminals, and the first request information is for requesting the access network device to configure a relay-based indirect link for the communication apparatus; and
the transceiver unit is further configured to receive first configuration information from the access network device, wherein the first configuration information is used to configure an indirect link for the communication apparatus over which relay is performed via the target relay terminal, and the target relay terminal is determined by the access network device from the one or more relay terminals.

27. The apparatus according to claim 26, wherein
the identifier of the one or more relay terminals is a cell radio network temporary identifier of the one or more relay terminals.

28. The apparatus according to claim 26 or 27, wherein
the first indication information comprises a first cause value, and the first cause value indicates the one or more relay terminals to provide a relay service for the communication apparatus; or
the first cause value is used as a cause value used by the one or more relay terminals to set up the radio resource control connection to the access network device.

29. The apparatus according to any one of claims 26 to 28, wherein
the first request information further comprises information about the one or more relay terminals; and
the information about the one or more relay terminals comprises one or more of load, a remaining battery level, and user equipment interface connection quality of the one or more relay terminals.

30. The apparatus according to any one of claims 26 to 29, wherein the apparatus further comprises:
a processing unit, configured to obtain a radio resource control connection status of candidate relay terminals paired with the communication apparatus and/or information about the candidate relay terminals, wherein the information about the candidate relay terminals comprises one or more of load, a remaining battery level, and user equipment interface connection quality of the candidate relay terminals, wherein
the processing unit is further configured to determine the one or more relay terminals from the candidate relay terminal based on the radio resource control connection status of the candidate relay terminal and/or the information about the candidate relay terminal.

31. The apparatus according to any one of claims 26 to 30, wherein
the processing unit is further configured to decide, based on a relationship between a communication status of the communication apparatus and a threshold, to request the access network device to configure the indirect link for the communication apparatus, wherein the threshold is determined by the communication apparatus or the access network device.

32. The apparatus according to claim 31, wherein
the communication status comprises one or more of the following:
an uplink rate, uplink bandwidth, a packet loss rate, and signal quality of a direct link.

33. A communication apparatus, wherein the apparatus comprises:
a transceiver unit, configured to receive first indication information from a remote terminal, wherein the first indication information indicates the communication apparatus to set up a radio resource control connection to the access network device, wherein
the transceiver unit is further configured to send an identifier of the communication apparatus to the remote terminal, wherein the identifier of the communication apparatus is allocated by the access network device to the communication apparatus after the radio resource control connection to the access network device is set up; and
the transceiver unit is further configured to receive second configuration information from the access network device, wherein the second configuration information is used to configure an indirect link for the remote terminal over which relay is performed via the communication apparatus.

34. The apparatus according to claim 33, wherein
the identifier of the communication apparatus is a cell radio network temporary identifier of the communication apparatus.

35. The apparatus according to claim 33 or 34, wherein
a radio resource control connection setup request message sent by the communication apparatus to the access network device comprises a second cause value, and the second cause value indicates a requirement of the communication apparatus for setting up the radio resource control connection.

36. The apparatus according to claim 35, wherein the apparatus further comprises:
a processing unit, configured to: when the first indication information carries a first cause value, use the first cause value as the second cause value;
a processing unit, configured to: when the first indication information carries the first cause value, and the first cause value is a cause value related to a high priority service, use the first cause value as the second cause value;
a processing unit, configured to determine one cause value from a plurality of candidate cause values as the second cause value; or
the second cause value is a cause value that is defined in a protocol and that indicates that the communication apparatus sets up the radio resource control connection to provide a relay service.

37. A communication apparatus, wherein the apparatus comprises:
a transceiver unit, configured to receive first request information from a remote terminal, wherein the first request information comprises an identifier of the one or more relay terminals, and the identifier of the one or more relay terminals is allocated by the communication apparatus to the one or more relay terminals after a radio resource control connection to the communication apparatus is set up; and
a processing unit, configured to determine a target relay terminal from the one or more relay terminals, wherein
the transceiver unit is further configured to send first configuration information to the remote terminal, wherein the first configuration information is used to configure an indirect link for the remote terminal over which relay is performed via the target relay terminal; and
the transceiver unit is further configured to send second configuration information to the target relay terminal, wherein the second configuration information is used to configure the indirect link.

38. The apparatus according to claim 37, wherein the processing unit is configured to determine the target relay terminal based on information about the one or more relay terminals, wherein
the information about the one or more relay terminals comprises one or more of load, a remaining battery level, and user equipment interface connection quality of the one or more relay terminals.

39. A communication apparatus, wherein the apparatus comprises:
a processing unit, configured to obtain a radio resource control connection status of one or more relay terminals; and
a transceiver unit, configured to send second request information to an access network device based on the radio resource control connection status of the one or more relay terminals, wherein the second request information is for requesting the access network device to configure a relay-based indirect link for the communication apparatus, wherein
the transceiver unit is further configured to receive third configuration information from the access network device, wherein the third configuration information is used to configure an indirect link for the communication apparatus over which relay is performed via a target relay terminal, and the target relay terminal is determined by the access network device from the one or more relay terminals.

40. The apparatus according to claim 39, wherein
when the radio resource control connection status of the one or more relay terminals is a connected state, the first request information comprises an identifier of the one or more relay terminals; or
when the radio resource control connection status of the one or more relay terminals is an idle state or an inactive state, the first request information comprises first indication information for requesting to configure the indirect link for the communication apparatus.

41. The apparatus according to claim 39 or 40, wherein
the transceiver unit is further configured to send second indication information to the target relay terminal, wherein the second indication information indicates the target relay terminal to set up a radio resource control connection to the access network device.

42. The apparatus according to claim 41, wherein
the second indication information comprises a third cause value, wherein the third cause value indicates the target relay terminal to provide a relay service for the communication apparatus, or is used as a cause value used by the target relay terminal to set up the radio resource control connection to the access network device.

43. The apparatus according to any one of claims 39 to 42, wherein
the second request information further comprises information about the one or more relay terminals, wherein
the information about the one or more relay terminals comprises one or more of load, a remaining battery level, and user equipment interface connection quality of the one or more relay terminals.

44. The apparatus according to any one of claims 39 to 43, wherein
the processing unit is further configured to obtain a radio resource control connection status of a candidate relay terminal paired with the communication apparatus and/or information about the candidate relay terminal, wherein the information about the candidate relay terminal comprises one or more of load, a remaining battery level, and user equipment interface connection quality of the candidate relay terminal; and
the processing unit is further configured to determine the one or more relay terminals from the candidate relay terminal based on the radio resource control connection status of the candidate relay terminal and/or the information about the candidate relay terminal.

45. The apparatus according to any one of claims 39 to 44, wherein
the processing unit is further configured to decide, based on a relationship between a communication status of the communication apparatus and a threshold, to request the access network device to configure the indirect link for the communication apparatus, wherein the threshold is determined by the communication apparatus or the access network device.

46. The apparatus according to claim 45, wherein
the communication status comprises one or more of the following:
an uplink rate, uplink bandwidth, a packet loss rate, and signal quality of a direct link.

47. A communication apparatus, wherein the apparatus comprises:
a transceiver unit, configured to receive second request information from a remote terminal, wherein the second request information is for requesting the communication apparatus to configure a relay-based indirect link for the remote terminal; and
a processing unit, configured to determine a target relay terminal based on the second request information, wherein
the transceiver unit is further configured to send third configuration information to the remote terminal, wherein the third configuration information is used to configure an indirect link for the remote terminal over which relay is performed via the target relay terminal; and
the transceiver unit is further configured to send fourth configuration information to the target relay terminal, wherein the fourth configuration information is used to configure the target relay terminal to provide a relay service on the indirect link.

48. The apparatus according to claim 47, wherein
the processing unit is further configured to: when the second request information comprises an identifier of the one or more relay terminals, determine the target relay terminal from the one or more relay terminals based on the identifier of the one or more relay terminals.

49. The apparatus according to claim 47, wherein
the processing unit is further configured to: when the second request information comprises indication information for requesting to configure the relay-based indirect link for the remote terminal, obtain the one or more relay terminals from a core network in response to the second request information; and
determine the target relay terminal from the one or more relay terminals.

50. The apparatus according to any one of claims 47 to 49, wherein the processing unit is further configured to determine the target relay terminal based on information about the one or more relay terminals, wherein
the information about the one or more relay terminals comprises one or more of load, a remaining battery level, and user equipment interface connection quality of the one or more relay terminals.

51. A communication apparatus, comprising: a processor, wherein the processor is connected to a memory, the memory is configured to store a computer program, and the processor is configured to execute the computer program stored in the memory, to enable the apparatus to perform the method according to any one of claims 1 to 25.

52. A computer-readable storage medium, wherein the computer-readable storage medium stores a computer program, and when the computer program runs, the method according to any one of claims 1 to 25 is implemented.

53. A communication system, wherein the communication system comprises a remote terminal, a relay terminal, and a network device, the remote terminal is configured to perform the method according to any one of claims 1 to 7 or 14 to 21, the relay terminal is configured to perform the method according to any one of claims 8 to 11 or 22 to 25, and the network device is configured to perform the method according to claim 12 or 13.

54. A chip, comprising a processor and an interface, wherein the processor is configured to read instructions to perform the method according to any one of claims 1 to 25.

55. A computer program product, wherein the computer program product comprises instructions; and when the instructions are run, the method according to any one of claims 1 to 25 is implemented.
